# EUROPEAN PATENT SPECIFICATION

(11) **EP 3 846 373 B1**
(45) Date of publication and mention of the grant of the patent: **10.04.2024**
(21) Application number: 20217086.6
(22) Date of filing: 23.12.2020
(51) Int. Cl.: H04L 5/00

(54) **MAC AND PHY FOR FORWARD COMPATIBLE OFDMA**
MAC UND PHY FÜR VORWÄRTSKOMPATIBLEN OFDMA
MAC ET PHY POUR OFDMA POST COMPATIBLE

(30) Priority: 05.01.2020 US 202062957277 P; 31.01.2020 US 202062968414 P
(43) Date of publication of application: 07.07.2021
(73) Proprietor: Intel Corporation, Santa Clara, CA 95054 (US)
(72) Inventor: Chen, Xiaogang, Portland, OR 97229 (US); Avital, Ziv, 6092000 Kadima (IL); Li, Qinghua, San Ramon, CA 94582 (US); Cariou, Laurent, Portland, OR 97219 (US); Huang, Po-Kai, San Jose, CA 95131 (US); Jiang, Feng, Sunnyvale, CA 94086 (US); Stacey, Robert J., Portland, OR 97210 (US); Kenney, Thomas J., Portland, OR 97229 (US)
(74) Representative: Viering, Jentschura & Partner mbB Patent- und Rechtsanwälte

(56) References cited:
- WO-A1-2018/195354
- US-A1- 2016 174 200

## Description

### TECHNICAL FIELD

Embodiments relate to wireless local area networks (WLANs) and Wi-Fi networks including networks operating in accordance with different versions or generations of the IEEE 802.11 family of standards. Some embodiments relate to a trigger frame or frame that includes resource allocation for different versions or generations of IEEE 802.11 and that transmits frames or portions of frames simultaneously in accordance with orthogonal frequency division multiple access (OFDMA) on different subchannels in accordance with the different versions or generations of IEEE 802.11.

### BACKGROUND

Efficient use of the resources of a wireless local-area network (WLAN) is important to provide bandwidth and acceptable response times to the users of the WLAN. However, often there are many devices trying to share the same resources and some devices may be limited by the communication protocol they use or by their hardware bandwidth. Moreover, wireless devices may need to operate with both newer protocols and with legacy device protocols.

WO 2018195354A1 concerns short feedback in wireless communications including wireless networks operating in accordance with the IEEE 802. 11 family of standards. A trigger frame (TF) for a null data packet (NDP) feedback report poll is transmitted by an HE access point, the TF comprising a feedback type field and user information fields, wherein the user information fields indicate ranges of association identifications (AIDs). The TF is received and decoded by HE stations (STA), which respond if it is determined that the TF indicates that the HE station is scheduled for an NDP feedback report response based on the range of AIDs indicated by the user information fields.

US 2016/0174200 A1 describes resource allocation for multiple user transmission in a high efficiency wireless LAN (HEW). An access point (AP) transmits a Physical layer Protocol Data Unit (PPDU) to a plurality of stations (STAs), this transmission includes transmitting, to the plurality of STAs, a preamble including a High-Efficiency SIGNAL (HE-SIG) field, an HEShort Training Field (HE-STF) field and an HE-Long Training Field (HE-LTF) field in the PPDU on a transmission channel; and transmitting, on the transmission channel, a data field including a group addressed frame transmitted in a first subchannel among a plurality of subchannels into which the transmission channel is divided.

### SUMMARY

The invention is an apparatus, a computer-readable storage medium and a method as defined in the appended claims.

### BRIEF DESCRIPTION OF THE DRAWINGS

The present disclosure is illustrated by way of example and not limitation in the figures of the accompanying drawings, in which like references indicate similar elements and in which:
FIG. 1 is a block diagram of a radio architecture in accordance with some embodiments;
FIG. 2 illustrates a front-end module circuitry for use in the radio architecture of FIG. 1 in accordance with some embodiments;
FIG. 3 illustrates a radio IC circuitry for use in the radio architecture of FIG. 1 in accordance with some embodiments;
FIG. 4 illustrates a baseband processing circuitry for use in the radio architecture of FIG. 1 in accordance with some embodiments;
FIG. 5 illustrates a WLAN in accordance with some embodiments;
FIG. 6 illustrates a block diagram of an example machine upon which any one or more of the techniques (e.g., methodologies) discussed herein may perform;
FIG. 7 illustrates a block diagram of an example wireless device upon which any one or more of the techniques (e.g., methodologies or operations) discussed herein may perform;
FIG. 8 illustrates a physical layer (PHY) protocol data unit (PPDU), in accordance with some embodiments;
FIG. 9 illustrates a PPDU, in accordance with some embodiments;
FIG. 10 illustrates a PPDU, in accordance with some embodiments;
FIG. 11 illustrates a PPDU, in accordance with some embodiments;
FIG. 12 illustrates a PPDU, in accordance with some embodiments;
FIG. 13 illustrates a method for multi-version PPDUs, in accordance with some embodiments;
FIG. 14 illustrates subchannels for different versions of a communication protocol, in accordance with some embodiments;
FIG. 15 illustrates subchannels for different versions of a communication protocol, in accordance with some embodiments;
FIG. 16 illustrates resource allocation (RA) information, in accordance with some embodiments;
FIG. 17 illustrates a PPDU, in accordance with some embodiments;
FIG. 18 illustrates RA information, in accordance with some embodiments;
FIG. 19 illustrates a frame, in accordance with some embodiments;
FIG. 20 illustrates a method for forward compatible OFDMA transmission, in accordance with some embodiments; and
FIG. 21 illustrates a method for forward compatible OFDMA transmission, in accordance with some embodiments.

### DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

Some embodiments relate to methods, computer readable media, and apparatus for ordering or scheduling location measurement reports, traffic indication maps (TIMs), and other information during SPs. Some embodiments relate to methods, computer readable media, and apparatus for extending TIMs. Some embodiments relate to methods, computer readable media, and apparatus for defining SPs during beacon intervals (BI), which may be based on TWTs.

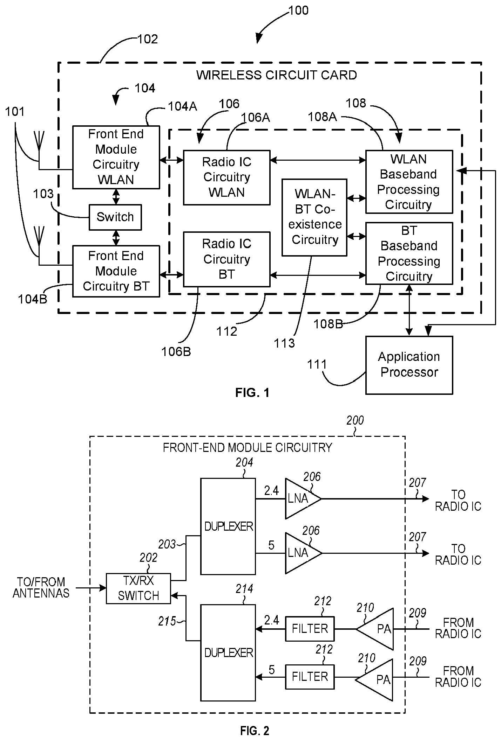

FIG. 1 is a block diagram of a radio architecture 100 in accordance with some embodiments. Radio architecture 100 may include radio front-end module (FEM) circuitry 104, radio IC circuitry 106 and baseband processing circuitry 108. Radio architecture 100 as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 104 may include a WLAN or Wi-Fi FEM circuitry 104A and a Bluetooth (BT) FEM circuitry 104B. The WLAN FEM circuitry 104A may include a receive signal path comprising circuitry configured to operate on WLAN RF signals received from one or more antennas 101, to amplify the received signals and to provide the amplified versions of the received signals to the WLAN radio IC circuitry 106A for further processing. The BT FEM circuitry 104B may include a receive signal path which may include circuitry configured to operate on BT RF signals received from one or more antennas 101, to amplify the received signals and to provide the amplified versions of the received signals to the BT radio IC circuitry 106B for further processing. FEM circuitry 104A may also include a transmit signal path which may include circuitry configured to amplify WLAN signals provided by the radio IC circuitry 106A for wireless transmission by one or more of the antennas 101. In addition, FEM circuitry 104B may also include a transmit signal path which may include circuitry configured to amplify BT signals provided by the radio IC circuitry 106B for wireless transmission by the one or more antennas. In the embodiment of FIG. 1, although FEM 104A and FEM 104B are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 106 as shown may include WLAN radio IC circuitry 106A and BT radio IC circuitry 106B. The WLAN radio IC circuitry 106A may include a receive signal path which may include circuitry to down-convert WLAN RF signals received from the FEM circuitry 104A and provide baseband signals to WLAN baseband processing circuitry 108A. BT radio IC circuitry 106B may in turn include a receive signal path which may include circuitry to down-convert BT RF signals received from the FEM circuitry 104B and provide baseband signals to BT baseband processing circuitry 108B. WLAN radio IC circuitry 106A may also include a transmit signal path which may include circuitry to up-convert WLAN baseband signals provided by the WLAN baseband processing circuitry 108A and provide WLAN RF output signals to the FEM circuitry 104A for subsequent wireless transmission by the one or more antennas 101. BT radio IC circuitry 106B may also include a transmit signal path which may include circuitry to up-convert BT baseband signals provided by the BT baseband processing circuitry 108B and provide BT RF output signals to the FEM circuitry 104B for subsequent wireless transmission by the one or more antennas 101. In the embodiment of FIG. 1, although radio IC circuitries 106A and 106B are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 108 may include a WLAN baseband processing circuitry 108A and a BT baseband processing circuitry 108B. The WLAN baseband processing circuitry 108A may include a memory, such as, for example, a set of RAM arrays in a Fast Fourier Transform or Inverse Fast Fourier Transform block (not shown) of the WLAN baseband processing circuitry 108A. Each of the WLAN baseband circuitry 108A and the BT baseband circuitry 108B may further include one or more processors and control logic to process the signals received from the corresponding WLAN or BT receive signal path of the radio IC circuitry 106, and to also generate corresponding WLAN or BT baseband signals for the transmit signal path of the radio IC circuitry 106. Each of the baseband processing circuitries 108A and 108B may further include physical layer (PHY) and medium access control layer (MAC) circuitry, and may further interface with application processor 111 for generation and processing of the baseband signals and for controlling operations of the radio IC circuitry 106.

Referring still to FIG. 1, according to the shown embodiment, WLAN-BT coexistence circuitry 113 may include logic providing an interface between the WLAN baseband circuitry 108A and the BT baseband circuitry 108B to enable use cases requiring WLAN and BT coexistence. In addition, a switch 103 may be provided between the WLAN FEM circuitry 104A and the BT FEM circuitry 104B to allow switching between the WLAN and BT radios according to application needs. In addition, although the antennas 101 are depicted as being respectively connected to the WLAN FEM circuitry 104A and the BT FEM circuitry 104B, embodiments include within their scope the sharing of one or more antennas as between the WLAN and BT FEMs, or the provision of more than one antenna connected to each of FEM 104A or 104B.

In some embodiments, the front-end module circuitry 104, the radio IC circuitry 106, and baseband processing circuitry 108 may be provided on a single radio card, such as wireless radio card 102. In some other embodiments, the one or more antennas 101, the FEM circuitry 104 and the radio IC circuitry 106 may be provided on a single radio card. In some other embodiments, the radio IC circuitry 106 and the baseband processing circuitry 108 may be provided on a single chip or IC, such as IC 112.

In some embodiments, the wireless radio card 102 may include a WLAN radio card and may be configured for Wi-Fi communications, although the scope of the embodiments is not limited in this respect. In some of these embodiments, the radio architecture 100 may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 100 may be part of a Wi-Fi communication station (STA) such as a wireless access point (AP), a base station or a mobile device including a Wi-Fi device. In some of these embodiments, radio architecture 100 may be configured to transmit and receive signals in accordance with specific communication standards and/or protocols, such as any of the Institute of Electrical and Electronics Engineers (IEEE) standards including, IEEE 802.1 1n-2009, IEEE 802.11-2012, IEEE 802.11-2016, IEEE 802.11ac, and/or IEEE 802.11ax standards and/or proposed specifications for WLANs, although the scope of embodiments is not limited in this respect. Radio architecture 100 may also be suitable to transmit and/or receive communications in accordance with other techniques and standards.

In some embodiments, the radio architecture 100 may be configured for high-efficiency (HE) Wi-Fi (HEW) communications in accordance with the IEEE 802.11ax standard. In these embodiments, the radio architecture 100 may be configured to communicate in accordance with an OFDMA technique, although the scope of the embodiments is not limited in this respect.

In some other embodiments, the radio architecture 100 may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 1, the BT baseband circuitry 108B may be compliant with a Bluetooth (BT) connectivity standard such as Bluetooth, Bluetooth 4.0 or Bluetooth 5.0, or any other iteration of the Bluetooth Standard. In embodiments that include BT functionality as shown for example in Fig. 1, the radio architecture 100 may be configured to establish a BT synchronous connection oriented (SCO) link and/or a BT low energy (BT LE) link. In some of the embodiments that include functionality, the radio architecture 100 may be configured to establish an extended SCO (eSCO) link for BT communications, although the scope of the embodiments is not limited in this respect. In some of these embodiments that include a BT functionality, the radio architecture may be configured to engage in a BT Asynchronous Connection-Less (ACL) communications, although the scope of the embodiments is not limited in this respect. In some embodiments, as shown in FIG. 1, the functions of a BT radio card and WLAN radio card may be combined on a single wireless radio card, such as single wireless radio card 102, although embodiments are not so limited, and include within their scope discrete WLAN and BT radio cards

In some embodiments, the radio-architecture 100 may include other radio cards, such as a cellular radio card configured for cellular (e.g., 3GPP such as LTE, LTE-Advanced or 5G communications).

In some IEEE 802.11 embodiments, the radio architecture 100 may be configured for communication over various channel bandwidths including bandwidths having center frequencies of about 900 MHz, 2.4 GHz, 5 GHz, and bandwidths of about 1 MHz, 2 MHz, 2.5 MHz, 4 MHz, 5MHz, 8 MHz, 10 MHz, 16 MHz, 20 MHz, 40MHz, 80MHz (with contiguous bandwidths) or 80+80MHz (160MHz) (with non-contiguous bandwidths). In some embodiments, a 320 MHz channel bandwidth may be used. The scope of the embodiments is not limited with respect to the above center frequencies however.

FIG. 2 illustrates FEM circuitry 200 in accordance with some embodiments. The FEM circuitry 200 is one example of circuitry that may be suitable for use as the WLAN and/or BT FEM circuitry 104A/104B (FIG. 1), although other circuitry configurations may also be suitable.

In some embodiments, the FEM circuitry 200 may include a TX/RX switch 202 to switch between transmit mode and receive mode operation. The FEM circuitry 200 may include a receive signal path and a transmit signal path. The receive signal path of the FEM circuitry 200 may include a low-noise amplifier (LNA) 206 to amplify received RF signals 203 and provide the amplified received RF signals 207 as an output (e.g., to the radio IC circuitry 106 (FIG. 1)). The transmit signal path of the circuitry 200 may include a power amplifier (PA) to amplify input RF signals 209 (e.g., provided by the radio IC circuitry 106), and one or more filters 212, such as band-pass filters (BPFs), low-pass filters (LPFs) or other types of filters, to generate RF signals 215 for subsequent transmission (e.g., by one or more of the antennas 101 (FIG. 1)).

In some dual-mode embodiments for Wi-Fi communication, the FEM circuitry 200 may be configured to operate in either the 2.4 GHz frequency spectrum or the 5 GHz frequency spectrum. In these embodiments, the receive signal path of the FEM circuitry 200 may include a receive signal path duplexer 204 to separate the signals from each spectrum as well as provide a separate LNA 206 for each spectrum as shown. In these embodiments, the transmit signal path of the FEM circuitry 200 may also include a power amplifier 210 and a filter 212, such as a BPF, a LPF or another type of filter for each frequency spectrum and a transmit signal path duplexer 214 to provide the signals of one of the different spectrums onto a single transmit path for subsequent transmission by the one or more of the antennas 101 (FIG. 1). In some embodiments, BT communications may utilize the 2.4 GHZ signal paths and may utilize the same FEM circuitry 200 as the one used for WLAN communications.

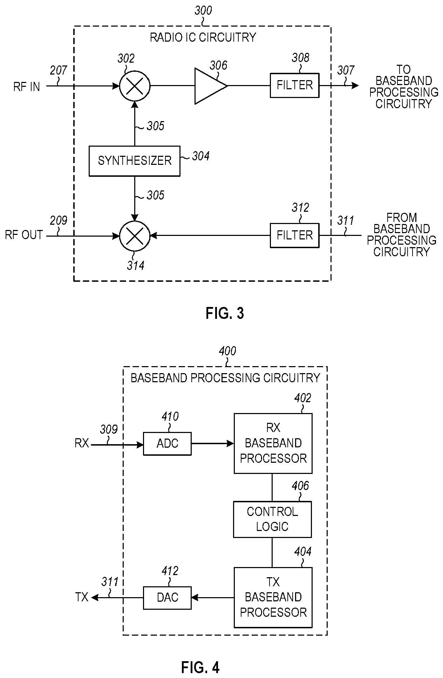

FIG. 3 illustrates radio integrated circuit (IC) circuitry 300 in accordance with some embodiments. The radio IC circuitry 300 is one example of circuitry that may be suitable for use as the WLAN or BT radio IC circuitry 106A/106B (FIG. 1), although other circuitry configurations may also be suitable.

In some embodiments, the radio IC circuitry 300 may include a receive signal path and a transmit signal path. The receive signal path of the radio IC circuitry 300 may include at least mixer circuitry 302, such as, for example, down-conversion mixer circuitry, amplifier circuitry 306 and filter circuitry 308. The transmit signal path of the radio IC circuitry 300 may include at least filter circuitry 312 and mixer circuitry 314, such as, for example, up-conversion mixer circuitry. Radio IC circuitry 300 may also include synthesizer circuitry 304 for synthesizing a frequency 305 for use by the mixer circuitry 302 and the mixer circuitry 314. The mixer circuitry 302 and/or 314 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. Fig. 3 illustrates only a simplified version of a radio IC circuitry, and may include, although not shown, embodiments where each of the depicted circuitries may include more than one component. For instance, mixer circuitry 302 and/or 314 may each include one or more mixers, and filter circuitries 308 and/or 312 may each include one or more filters, such as one or more BPFs and/or LPFs according to application needs. For example, when mixer circuitries are of the direct-conversion type, they may each include two or more mixers.

In some embodiments, mixer circuitry 302 may be configured to down-convert RF signals 207 received from the FEM circuitry 104 (FIG. 1) based on the synthesized frequency 305 provided by synthesizer circuitry 304. The amplifier circuitry 306 may be configured to amplify the down-converted signals and the filter circuitry 308 may include a LPF configured to remove unwanted signals from the down-converted signals to generate output baseband signals 307. Output baseband signals 307 may be provided to the baseband processing circuitry 108 (FIG. 1) for further processing. In some embodiments, the output baseband signals 307 may be zero-frequency baseband signals, although this is not a requirement. In some embodiments, mixer circuitry 302 may comprise passive mixers, although the scope of the embodiments is not limited in this respect.

In some embodiments, the mixer circuitry 314 may be configured to up-convert input baseband signals 311 based on the synthesized frequency 305 provided by the synthesizer circuitry 304 to generate RF output signals 209 for the FEM circuitry 104. The baseband signals 311 may be provided by the baseband processing circuitry 108 and may be filtered by filter circuitry 312. The filter circuitry 312 may include a LPF or a BPF, although the scope of the embodiments is not limited in this respect.

In some embodiments, the mixer circuitry 302 and the mixer circuitry 314 may each include two or more mixers and may be arranged for quadrature down-conversion and/or up-conversion respectively with the help of synthesizer 304. In some embodiments, the mixer circuitry 302 and the mixer circuitry 314 may each include two or more mixers each configured for image rejection (e.g., Hartley image rejection). In some embodiments, the mixer circuitry 302 and the mixer circuitry 314 may be arranged for direct down-conversion and/or direct up-conversion, respectively. In some embodiments, the mixer circuitry 302 and the mixer circuitry 314 may be configured for super-heterodyne operation, although this is not a requirement.

Mixer circuitry 302 may comprise, according to one embodiment: quadrature passive mixers (e.g., for the in-phase (I) and quadrature phase (Q) paths). In such an embodiment, RF input signal 207 from Fig. 3 may be down-converted to provide I and Q baseband output signals to be sent to the baseband processor

Quadrature passive mixers may be driven by zero and ninety-degree time-varying LO switching signals provided by a quadrature circuitry which may be configured to receive a LO frequency (f_{LO}) from a local oscillator or a synthesizer, such as LO frequency 305 of synthesizer 304 (FIG. 3). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have a 25% duty cycle and a 50% offset. In some embodiments, each branch of the mixer circuitry (e.g., the in-phase (I) and quadrature phase (Q) path) may operate at a 25% duty cycle, which may result in a significant reduction is power consumption.

The RF input signal 207 (FIG. 2) may comprise a balanced signal, although the scope of the embodiments is not limited in this respect. The I and Q baseband output signals may be provided to low-noise amplifier, such as amplifier circuitry 306 (FIG. 3) or to filter circuitry 308 (FIG. 3).

In some embodiments, the output baseband signals 307 and the input baseband signals 311 may be analog baseband signals, although the scope of the embodiments is not limited in this respect. In some alternate embodiments, the output baseband signals 307 and the input baseband signals 311 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 304 may be a fractional-N synthesizer or a fractional N/N+1 synthesizer, although the scope of the embodiments is not limited in this respect as other types of frequency synthesizers may be suitable. For example, synthesizer circuitry 304 may be a delta-sigma synthesizer, a frequency multiplier, or a synthesizer comprising a phase-locked loop with a frequency divider. According to some embodiments, the synthesizer circuitry 304 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 304 may be provided by a voltage controlled oscillator (VCO), although that is not a requirement. A divider control input may further be provided by either the baseband processing circuitry 108 (FIG. 1) or the application processor 111 (FIG. 1) depending on the desired output frequency 305. In some embodiments, a divider control input (e.g., N) may be determined from a look-up table (e.g., within a Wi-Fi card) based on a channel number and a channel center frequency as determined or indicated by the application processor 111.

In some embodiments, synthesizer circuitry 304 may be configured to generate a carrier frequency as the output frequency 305, while in other embodiments, the output frequency 305 may be a fraction of the carrier frequency (e.g., one-half the carrier frequency, one-third the carrier frequency). In some embodiments, the output frequency 305 may be a LO frequency (f_{LO}).

FIG. 4 illustrates a functional block diagram of baseband processing circuitry 400 in accordance with some embodiments. The baseband processing circuitry 400 is one example of circuitry that may be suitable for use as the baseband processing circuitry 108 (FIG. 1), although other circuitry configurations may also be suitable. The baseband processing circuitry 400 may include a receive baseband processor (RX BBP) 402 for processing receive baseband signals 309 provided by the radio IC circuitry 106 (FIG. 1) and a transmit baseband processor (TX BBP) 404 for generating transmit baseband signals 311 for the radio IC circuitry 106. The baseband processing circuitry 400 may also include control logic 406 for coordinating the operations of the baseband processing circuitry 400.

In some embodiments (e.g., when analog baseband signals are exchanged between the baseband processing circuitry 400 and the radio IC circuitry 106), the baseband processing circuitry 400 may include ADC 410 to convert analog baseband signals received from the radio IC circuitry 106 to digital baseband signals for processing by the RX BBP 402. In these embodiments, the baseband processing circuitry 400 may also include DAC 412 to convert digital baseband signals from the TX BBP 404 to analog baseband signals.

In some embodiments that communicate OFDM signals or OFDMA signals, such as through baseband processor 108A, the transmit baseband processor 404 may be configured to generate OFDM or OFDMA signals as appropriate for transmission by performing an inverse fast Fourier transform (IFFT). The receive baseband processor 402 may be configured to process received OFDM signals or OFDMA signals by performing an FFT. In some embodiments, the receive baseband processor 402 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring to FIG. 1, in some embodiments, the antennas 101 (FIG. 1) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 101 may each include a set of phased-array antennas, although embodiments are not so limited.

Although the radio-architecture 100 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

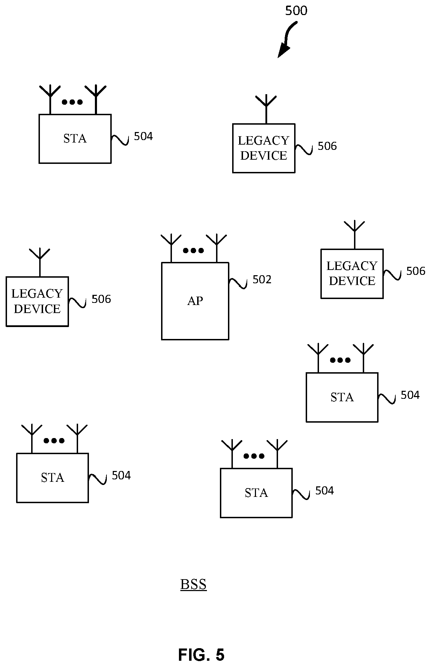

FIG. 5 illustrates a WLAN 500 in accordance with some embodiments. The WLAN 500 may comprise a basis service set (BSS) that may include an access point (AP) 502, a plurality of stations (STAs) 504, and a plurality of legacy devices 506. In some embodiments, the STAs 504 and/or AP 502 are configured to operate in accordance with IEEE 802.11be extremely high throughput (EHT) and/or high efficiency (HE) IEEE 802.11ax. In some embodiments, the STAs 504 and/or AP 520 are configured to operate in accordance with IEEE 802.11az. In some embodiments, IEEE 802.11EHT may be termed Next Generation 802.11.

The AP 502 may be an AP using the IEEE 802.11 to transmit and receive. The AP 502 may be a base station. The AP 502 may use other communications protocols as well as the IEEE 802.11 protocol. The EHT protocol may be termed a different name in accordance with some embodiments. The IEEE 802.11 protocol may include using orthogonal frequency division multiple-access (OFDMA), time division multiple access (TDMA), and/or code division multiple access (CDMA). The IEEE 802.11 protocol may include a multiple access technique. For example, the IEEE 802.11 protocol may include space-division multiple access (SDMA) and/or multiple-user multiple-input multiple-output (MU-MIMO). There may be more than one EHT AP 502 that is part of an extended service set (ESS). A controller (not illustrated) may store information that is common to the more than one APs 502 and may control more than one BSS, e.g., assign primary channels, colors, etc. AP 502 may be connected to the internet.

The legacy devices 506 may operate in accordance with one or more of IEEE 802.11 a/b/g/n/ac/ad/af/ah/aj/ay/ax, or another legacy wireless communication standard. The legacy devices 506 may be STAs or IEEE STAs. The STAs 504 may be wireless transmit and receive devices such as cellular telephone, portable electronic wireless communication devices, smart telephone, handheld wireless device, wireless glasses, wireless watch, wireless personal device, tablet, or another device that may be transmitting and receiving using the IEEE 802.11 protocol such as IEEE 802.11be or another wireless protocol.

The AP 502 may communicate with legacy devices 506 in accordance with legacy IEEE 802.11 communication techniques. In example embodiments, the H AP 502 may also be configured to communicate with STAs 504 in accordance with legacy IEEE 802.11 communication techniques.

In some embodiments, a HE or EHT frames may be configurable to have the same bandwidth as a channel. The HE or EHT frame may be a physical Layer Convergence Procedure (PLCP) Protocol Data Unit (PPDU). In some embodiments, PPDU may be an abbreviation for physical layer protocol data unit (PPDU). In some embodiments, there may be different types of PPDUs that may have different fields and different physical layers and/or different media access control (MAC) layers. For example, a single user (SU) PPDU, multiple-user (MU) PPDU, extended-range (ER) SU PPDU, and/or trigger-based (TB) PPDU. In some embodiments EHT may be the same or similar as HE PPDUs.

The bandwidth of a channel may be 20MHz, 40MHz, or 80MHz, 80+80MHz, 160MHz, 160+160MHz, 320MHz, 320+320MHz, 640MHz bandwidths. In some embodiments, the bandwidth of a channel less than 20 MHz may be 1 MHz, 1.25MHz, 2.03MHz, 2.5MHz, 4.06 MHz, 5MHz and 10MHz, or a combination thereof or another bandwidth that is less or equal to the available bandwidth may also be used. In some embodiments the bandwidth of the channels may be based on a number of active data subcarriers. In some embodiments the bandwidth of the channels is based on 26, 52, 106, 242, 484, 996, or 2x996 active data subcarriers or tones that are spaced by 20 MHz. In some embodiments the bandwidth of the channels is 256 tones spaced by 20 MHz. In some embodiments the channels are multiple of 26 tones or a multiple of 20 MHz. In some embodiments a 20 MHz channel may comprise 242 active data subcarriers or tones, which may determine the size of a Fast Fourier Transform (FFT). An allocation of a bandwidth or a number of tones or sub-carriers may be termed a resource unit (RU) allocation in accordance with some embodiments.

In some embodiments, the 26-subcarrier RU and 52-subcarrier RU are used in the 20 MHz, 40 MHz, 80 MHz, 160 MHz and 80+80 MHz OFDMA HE PPDU formats. In some embodiments, the 106-subcarrier RU is used in the 20 MHz, 40 MHz, 80 MHz, 160 MHz and 80+80 MHz OFDMA and MU-MIMO HE PPDU formats. In some embodiments, the 242-subcarrier RU is used in the 40 MHz, 80 MHz, 160 MHz and 80+80 MHz OFDMA and MU-MIMO HE PPDU formats. In some embodiments, the 484-subcarrier RU is used in the 80 MHz, 160 MHz and 80+80 MHz OFDMA and MU-MIMO HE PPDU formats. In some embodiments, the 996-subcarrier RU is used in the 160 MHz and 80+80 MHz OFDMA and MU-MIMO HE PPDU formats.

A HE or EHT frame may be configured for transmitting a number of spatial streams, which may be in accordance with MU-MIMO and may be in accordance with OFDMA. In other embodiments, the AP 502, STA 504, and/or legacy device 506 may also implement different technologies such as code division multiple access (CDMA) 2000, CDMA 2000 1X, CDMA 2000 Evolution-Data Optimized (EV-DO), Interim Standard 2000 (IS-2000), Interim Standard 95 (IS-95), Interim Standard 856 (IS-856), Long Term Evolution (LTE), Global System for Mobile communications (GSM), Enhanced Data rates for GSM Evolution (EDGE), GSM EDGE (GERAN), IEEE 802.16 (i.e., Worldwide Interoperability for Microwave Access (WiMAX)), BlueTooth^{®}, low-power BlueTooth^{®}, or other technologies.

In accordance with some IEEE 802.11 embodiments, e.g, IEEE 802.11EHT/ax embodiments, a HE AP 502 may operate as a master station which may be arranged to contend for a wireless medium (e.g., during a contention period) to receive exclusive control of the medium for a transmission opportunity (TXOP). The AP 502 may transmit an EHT/HE trigger frame transmission, which may include a schedule for simultaneous UL/DL transmissions from STAs 504. The AP 502 may transmit a time duration of the TXOP and sub-channel information. During the TXOP, STAs 504 may communicate with the AP 502 in accordance with a non-contention based multiple access technique such as OFDMA or MU-MIMO. This is unlike conventional WLAN communications in which devices communicate in accordance with a contention-based communication technique, rather than a multiple access technique. During the HE or EHT control period, the AP 502 may communicate with stations 504 using one or more HE or EHT frames. During the TXOP, the HE STAs 504 may operate on a sub-channel smaller than the operating range of the AP 502. During the TXOP, legacy stations refrain from communicating. The legacy stations may need to receive the communication from the HE AP 502 to defer from communicating.

In accordance with some embodiments, during the TXOP the STAs 504 may contend for the wireless medium with the legacy devices 506 being excluded from contending for the wireless medium during the master-sync transmission. In some embodiments the trigger frame may indicate an UL-MU-MIMO and/or UL OFDMA TXOP. In some embodiments, the trigger frame may include a DL UL-MU-MIMO and/or DL OFDMA with a schedule indicated in a preamble portion of trigger frame.

In some embodiments, the multiple-access technique used during the HE or EHT TXOP may be a scheduled OFDMA technique, although this is not a requirement. In some embodiments, the multiple access technique may be a time-division multiple access (TDMA) technique or a frequency division multiple access (FDMA) technique. In some embodiments, the multiple access technique may be a space-division multiple access (SDMA) technique. In some embodiments, the multiple access technique may be a Code division multiple access (CDMA).

The AP 502 may also communicate with legacy stations 506 and/or STAs 504 in accordance with legacy IEEE 802.11 communication techniques. In some embodiments, the AP 502 may also be configurable to communicate with STAs 504 outside the TXOP in accordance with legacy IEEE 802.11 or IEEE 802.11EHT/ax communication techniques, although this is not a requirement.

In some embodiments the STA 504 may be a "group owner" (GO) for peer-to-peer modes of operation. A wireless device may be a STA 502 or a HE AP 502.

In some embodiments, the STA 504 and/or AP 502 may be configured to operate in accordance with IEEE 802.11mc. In example embodiments, the radio architecture of FIG. 1 is configured to implement the STA 504 and/or the AP 502. In example embodiments, the front-end module circuitry of FIG. 2 is configured to implement the STA 504 and/or the AP 502. In example embodiments, the radio IC circuitry of FIG. 3 is configured to implement the HE station 504 and/or the AP 502. In example embodiments, the base-band processing circuitry of FIG. 4 is configured to implement the STA 504 and/or the AP 502.

In example embodiments, the STAs 504, AP 502, an apparatus of the STA 504, and/or an apparatus of the AP 502 may include one or more of the following: the radio architecture of FIG. 1, the front-end module circuitry of FIG. 2, the radio IC circuitry of FIG. 3, and/or the base-band processing circuitry of FIG. 4.

In example embodiments, the radio architecture of FIG. 1, the front-end module circuitry of FIG. 2, the radio IC circuitry of FIG. 3, and/or the base-band processing circuitry of FIG. 4 may be configured to perform the methods and operations/functions herein described in conjunction with FIGS. 1-21.

In example embodiments, the STAs 504 and/or the HE AP 502 are configured to perform the methods and operations/functions described herein in conjunction with FIGS. 1-21. In example embodiments, an apparatus of the STA 504 and/or an apparatus of the AP 502 are configured to perform the methods and functions described herein in conjunction with FIGS. 1-21. The term Wi-Fi may refer to one or more of the IEEE 802.11 communication standards. AP and STA may refer to EHT/HE access point and/or EHT/HE station as well as legacy devices 506.

In some embodiments, a HE AP STA may refer to a AP 502 and/or STAs 504 that are operating as EHT APs 502. In some embodiments, when a STA 504 is not operating as an AP, it may be referred to as a non-AP STA or non-AP. In some embodiments, STA 504 may be referred to as either an AP STA or a non-AP.

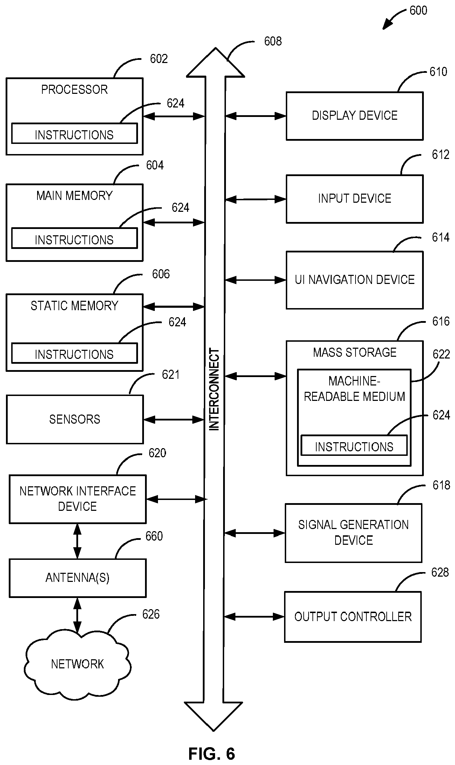

FIG. 6 illustrates a block diagram of an example machine 600 upon which any one or more of the techniques (e.g., methodologies) discussed herein may perform. In alternative embodiments, the machine 600 may operate as a standalone device or may be connected (e.g., networked) to other machines. In a networked deployment, the machine 600 may operate in the capacity of a server machine, a client machine, or both in server-client network environments. In an example, the machine 600 may act as a peer machine in peer-to-peer (P2P) (or other distributed) network environment. The machine 600 may be a HE AP 502, EVT station 504, personal computer (PC), a tablet PC, a set-top box (STB), a personal digital assistant (PDA), a portable communications device, a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Machine (e.g., computer system) 600 may include a hardware processor 602 (e.g., a central processing unit (CPU), a graphics processing unit (GPU), a hardware processor core, or any combination thereof), a main memory 604 and a static memory 606, some or all of which may communicate with each other via an interlink (e.g., bus) 608.

Specific examples of main memory 604 include Random Access Memory (RAM), and semiconductor memory devices, which may include, in some embodiments, storage locations in semiconductors such as registers. Specific examples of static memory 606 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

The machine 600 may further include a display device 610, an input device 612 (e.g., a keyboard), and a user interface (UI) navigation device 614 (e.g., a mouse). In an example, the display device 610, input device 612 and UI navigation device 614 may be a touch screen display. The machine 600 may additionally include a mass storage (e.g., drive unit) 616, a signal generation device 618 (e.g., a speaker), a network interface device 620, and one or more sensors 621, such as a global positioning system (GPS) sensor, compass, accelerometer, or other sensor. The machine 600 may include an output controller 628, such as a serial (e.g., universal serial bus (USB), parallel, or other wired or wireless (e.g., infrared(IR), near field communication (NFC), etc.) connection to communicate or control one or more peripheral devices (e.g., a printer, card reader, etc.). In some embodiments the processor 602 and/or instructions 624 may comprise processing circuitry and/or transceiver circuitry.

The storage device 616 may include a machine readable medium 622 on which is stored one or more sets of data structures or instructions 624 (e.g., software) embodying or utilized by any one or more of the techniques or functions described herein. The instructions 624 may also reside, completely or at least partially, within the main memory 604, within static memory 606, or within the hardware processor 602 during execution thereof by the machine 600. In an example, one or any combination of the hardware processor 602, the main memory 604, the static memory 606, or the storage device 616 may constitute machine readable media.

Specific examples of machine readable media may include: non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine readable medium 622 is illustrated as a single medium, the term "machine readable medium" may include a single medium or multiple media (e.g., a centralized or distributed database, and/or associated caches and servers) configured to store the one or more instructions 624.

An apparatus of the machine 600 may be one or more of a hardware processor 602 (e.g., a central processing unit (CPU), a graphics processing unit (GPU), a hardware processor core, or any combination thereof), a main memory 604 and a static memory 606, sensors 621, network interface device 620, antennas 660, a display device 610, an input device 612, a UI navigation device 614, a mass storage 616, instructions 624, a signal generation device 618, and an output controller 628. The apparatus may be configured to perform one or more of the methods and/or operations disclosed herein. The apparatus may be intended as a component of the machine 600 to perform one or more of the methods and/or operations disclosed herein, and/or to perform a portion of one or more of the methods and/or operations disclosed herein. In some embodiments, the apparatus may include a pin or other means to receive power. In some embodiments, the apparatus may include power conditioning hardware.

The term "machine readable medium" may include any medium that is capable of storing, encoding, or carrying instructions for execution by the machine 600 and that cause the machine 600 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine-readable media. In some examples, machine readable media may include machine readable media that is not a transitory propagating signal.

The instructions 624 may further be transmitted or received over a communications network 626 using a transmission medium via the network interface device 620 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others.

In an example, the network interface device 620 may include one or more physical jacks (e.g., Ethernet, coaxial, or phone jacks) or one or more antennas to connect to the communications network 626. In an example, the network interface device 620 may include one or more antennas 660 to wirelessly communicate using at least one of single-input multiple-output (SIMO), multiple-input multiple-output (MIMO), or multiple-input single-output (MISO) techniques. In some examples, the network interface device 620 may wirelessly communicate using Multiple User MIMO techniques. The term "transmission medium" shall be taken to include any intangible medium that is capable of storing, encoding or carrying instructions for execution by the machine 600, and includes digital or analog communications signals or other intangible medium to facilitate communication of such software.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; flash memory, etc.

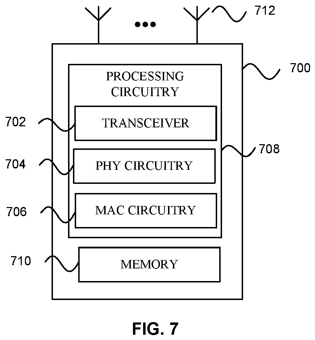

FIG. 7 illustrates a block diagram of an example wireless device 700 upon which any one or more of the techniques (e.g., methodologies or operations) discussed herein may perform. The wireless device 700 may be a HE device or HE wireless device. The wireless device 700 may be a HE STA 504, HE AP 502, and/or a HE STA or HE AP. A HE STA 504, HE AP 502, and/or a HE AP or HE STA may include some or all of the components shown in FIGS. 1-7. The wireless device 700 may be an example machine 600 as disclosed in conjunction with FIG. 6.

The wireless device 700 may include processing circuitry 708. The processing circuitry 708 may include a transceiver 702, physical layer circuitry (PHY circuitry) 704, and MAC layer circuitry (MAC circuitry) 706, one or more of which may enable transmission and reception of signals to and from other wireless devices 700 (e.g., HE AP 502, HE STA 504, and/or legacy devices 506) using one or more antennas 712. As an example, the PHY circuitry 704 may perform various encoding and decoding functions that may include formation of baseband signals for transmission and decoding of received signals. As another example, the transceiver 702 may perform various transmission and reception functions such as conversion of signals between a baseband range and a Radio Frequency (RF) range.

Accordingly, the PHY circuitry 704 and the transceiver 702 may be separate components or may be part of a combined component, e.g., processing circuitry 708. In addition, some of the described functionality related to transmission and reception of signals may be performed by a combination that may include one, any or all of the PHY circuitry 704 the transceiver 702, MAC circuitry 706, memory 710, and other components or layers. The MAC circuitry 706 may control access to the wireless medium. The wireless device 700 may also include memory 710 arranged to perform the operations described herein, e.g., some of the operations described herein may be performed by instructions stored in the memory 710.

The antennas 712 (some embodiments may include only one antenna) may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 712 may be effectively separated to take advantage of spatial diversity and the different channel characteristics that may result.

One or more of the memory 710, the transceiver 702, the PHY circuitry 704, the MAC circuitry 706, the antennas 712, and/or the processing circuitry 708 may be coupled with one another. Moreover, although memory 710, the transceiver 702, the PHY circuitry 704, the MAC circuitry 706, the antennas 712 are illustrated as separate components, one or more of memory 710, the transceiver 702, the PHY circuitry 704, the MAC circuitry 706, the antennas 712 may be integrated in an electronic package or chip.

In some embodiments, the wireless device 700 may be a mobile device as described in conjunction with FIG. 6. In some embodiments the wireless device 700 may be configured to operate in accordance with one or more wireless communication standards as described herein (e.g., as described in conjunction with FIGS. 1-6, IEEE 802.11). In some embodiments, the wireless device 700 may include one or more of the components as described in conjunction with FIG. 6 (e.g., display device 610, input device 612, etc.) Although the wireless device 700 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

In some embodiments, an apparatus of or used by the wireless device 700 may include various components of the wireless device 700 as shown in FIG. 7 and/or components from FIGS. 1-6. Accordingly, techniques and operations described herein that refer to the wireless device 700 may be applicable to an apparatus for a wireless device 700 (e.g., HE AP 502 and/or HE STA 504), in some embodiments. In some embodiments, the wireless device 700 is configured to decode and/or encode signals, packets, and/or frames as described herein, e.g., PPDUs.

In some embodiments, the MAC circuitry 706 may be arranged to contend for a wireless medium during a contention period to receive control of the medium for a HE TXOP and encode or decode an HE PPDU. In some embodiments, the MAC circuitry 706 may be arranged to contend for the wireless medium based on channel contention settings, a transmitting power level, and a clear channel assessment level (e.g., an energy detect level).

The PHY circuitry 704 may be arranged to transmit signals in accordance with one or more communication standards described herein. For example, the PHY circuitry 704 may be configured to transmit a HE PPDU. The PHY circuitry 704 may include circuitry for modulation/demodulation, upconversion/downconversion, filtering, amplification, etc. In some embodiments, the processing circuitry 708 may include one or more processors. The processing circuitry 708 may be configured to perform functions based on instructions being stored in a RAM or ROM, or based on special purpose circuitry. The processing circuitry 708 may include a processor such as a general purpose processor or special purpose processor. The processing circuitry 708 may implement one or more functions associated with antennas 712, the transceiver 702, the PHY circuitry 704, the MAC circuitry 706, and/or the memory 710. In some embodiments, the processing circuitry 708 may be configured to perform one or more of the functions/operations and/or methods described herein.

In mmWave technology, communication between a station (e.g., the HE stations 504 of FIG. 5 or wireless device 700) and an access point (e.g., the HE AP 502 of FIG. 5 or wireless device 700) may use associated effective wireless channels that are highly directionally dependent. To accommodate the directionality, beamforming techniques may be utilized to radiate energy in a certain direction with certain beamwidth to communicate between two devices. The directed propagation concentrates transmitted energy toward a target device in order to compensate for significant energy loss in the channel between the two communicating devices. Using directed transmission may extend the range of the millimeter-wave communication versus utilizing the same transmitted energy in omni-directional propagation.

Some embodiments enable multiple versions of IEEE 802.11 to be scheduled in one PPDU. For example, WiFi 7, WiFi8, and WiFi9 may be scheduled in one PPDU with OFDMA (forward compatible OFDMA design). WiFi 7 is IEEE 802.11be or EHT. WiFi 6 is IEEE 802.11ax. WiFi8 and WiFi9 are future versions of IEEE 802.11 that may have different OFDMA designs, e.g., different duration and symbol values. The technical problem is how include the different versions of WiFi in one PPDU and design the current version of WiFi to accommodate the future version of WiFi. OFDMA is first supported by IEEE 802.11ax. But IEEE 802.11ax does not support mixing WiFi 6/7/8 in one PPDU.

Enabling one PPDU to include multiple versions of IEEE 802.11 provides greater scheduling flexibility and greater efficiency in the use of the wireless medium. A large number of legacy WiFi devices typically exist together with the new versions of WiFi. For example, WiFi 7 AP will need to serve a large number of WiFi 6 clients and WiFi 7 clients, which may be fewer than the WiFi 6 clients at the start of adoption of WiFi 7. Embodiments enable WiFi 7 devices and WiFi 6 device to operate in accordance with OFDMA with one another.

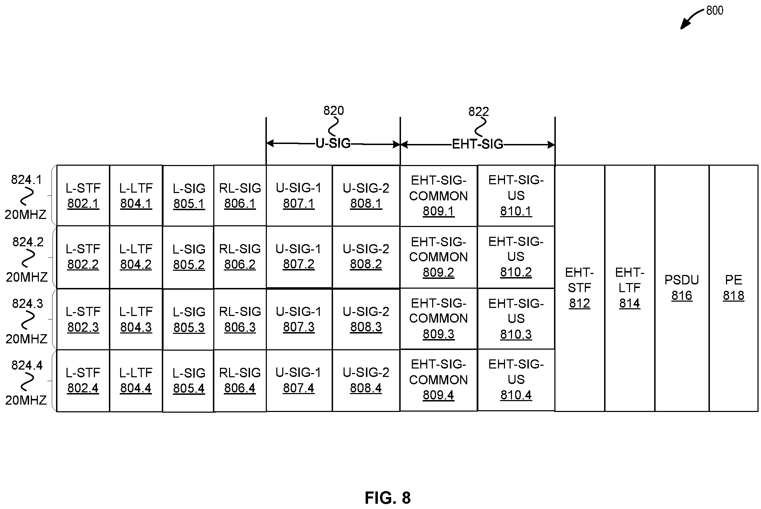

FIG. 8 illustrates a physical layer (PHY) protocol data unit (PPDU) 800, in accordance with some embodiments. Illustrated in FIG. 8 is legacy (L) short -training field (STF)(L-STF) 802, L-long-training field (LTF)(L-LTF) 804, L-signal field (SIG)(L-SIG) 805, repeated (R) L-SIG (RL-SIG) 806, U-SIG-1 807, U-SIG-2 808, EHT-SIG common 809, EHT-SIG-user specific (US)(EHT-SIG-US) 810, EHT-STF 812, EHT-LTF 814, PSDU 816, PE 818, U-SIG 820, and EHT-SIG 822, and 20 MHz 824.1 through 20 MHz 824.4. The EHT-SIG common 809 and/or EH-SIG-US 810 include resource allocations for STAs 504.

L-STF 802, L-LTF 804, L-SIG 805, and RL-SIG 806 are legacy signal fields. The U-SIG 820 includes information to decode EHT PPDUs and may include information for forward compatibility. The EHT-SIG 822 includes information for decoding the PSDU 816 and may include information regarding the EHT-STF 812 and EHT-LTF 814 such as the duration of the transmission.

The legacy preamble, U-SIG 820, and EHT-SIG 822 are transmitted on each 20 MHz channel 824 and EHT-STF 812, EHT-LTF 814, PSDU 816, and PE 818 are transmitted on entire 80 MHz channel, in accordance with some embodiments. The legacy preamble, e.g., L-STF 802, L-LTF 804, L-SIG 805, and RL-SIG 806 may be the same or similar as a preamble for IEEE 802.11ax.

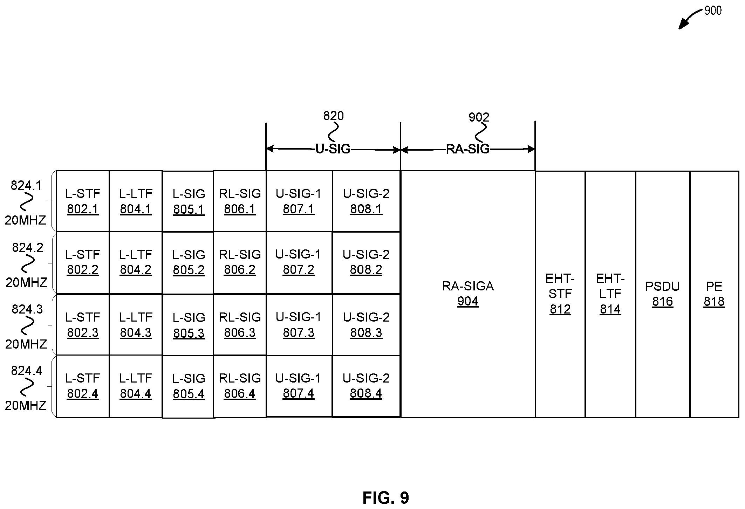

FIG. 9 illustrates a PPDU 900, in accordance with some embodiments. Resource allocation (RA) SIG (RA-SIG) 902 includes resource allocations for different versions of IEEE 802.11, in accordance with some embodiments. Throughout this disclosure different versions of IEEE 802.11 are discussed, but one skilled in the art would recognize that different versions of communication protocols could be used other than IEEE 802.11.

RA-SIG 902 includes RA-SIGA 904, which includes resource allocations for STAs 504. The PPDU 900 supports difference versions of IEEE 802.11 using OFDMA in the PPDU 900. The RA-SIG 902 may include RAs for EHT STAs and RA information for post-EHT STAs. In some embodiments, the RA-SIGA 904 is repeated per 20 MHz. In some embodiments, the RA-SIGA 904 is repeated every 80 MHz or another bandwidth. The RA-SIGA 904 may include RA information a single version of IEEE 802.11.

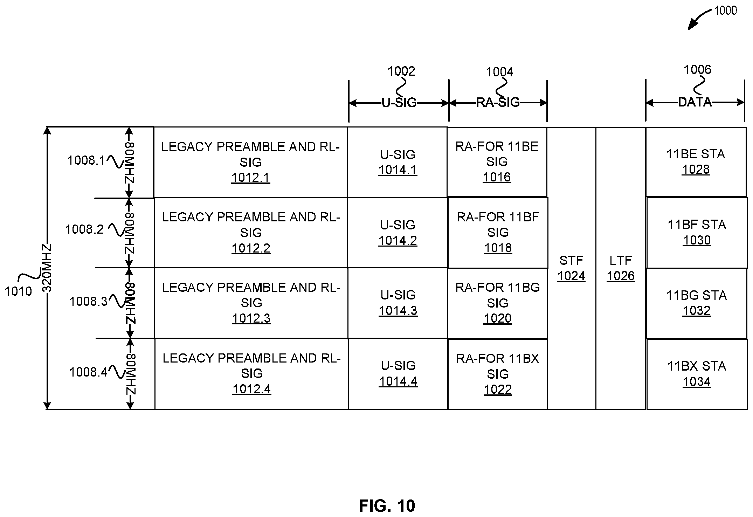

FIG. 10 illustrates a PPDU 1000, in accordance with some embodiments. Illustrated in FIG. 10 is 80 MHz subchannels 1008, legacy preamble and RL-SIG 1012, U-SIG 1014, RA SIG 1004, STF 1024, LTF 1026, and data 1006. The RA-SIG 1004 may include information for different versions of IEEE 802.11 on a per 80 MHz 1008 subchannel basis that indicates the RAs to decode the data 1006 on that 80 MHz 1008 subchannel. As illustrated, 80 MHz 1008.1 subchannel includes RA-FOR 11BE SIG 1016 and 11BE STA 1028 for data 1006. RA-for 11be sig 1016, RA for 11BF SIG 1018, RA for 11BG SIG 1020, RA for 11BX SIG 1022 include RAs for STAs 504 configured to operate in accordance with IEEE 802.11be, IEEE 802.11BF, IEEE 802.11BG, and IEEE 802.11BX to decode 11BE STA 1028, 11BF STA 1030, 11BF STA 1032, and 11BX STA 1034, respectively. IEEE 802.11BF, IEEE 802.11BG, and IEEE 802.11BX are place holder names for later version of IEEE 802.11be. The STAs 504 of each WiFi generation is configured to decode the RA-SIG 1004 corresponding to their version of IEEE 802.11. Each RA-subchannel is one or more 20MHz channels of the 80 MHz 1008 subchannels, in accordance with some embodiments.

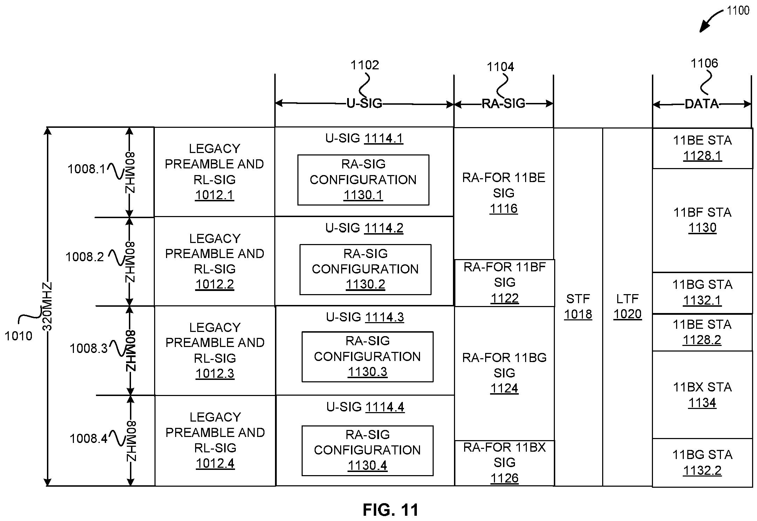

FIG. 11 illustrates a PPDU 1100, in accordance with some embodiments. FIG. 11 illustrates U-SIG 1102, U-SIG 1114, RA-SIG configuration 1130, RA for 11BE SIG 1116, RA for 11BF SIG 1122, RA for 11BG SIG 1124, RA for 11BX SIG 1126, data 1106, 11BE STA 1128.1, 11BF STA 1130, 11BG STA 1132.1, 11BE STA 1128.2, 11BX STA 1134, and 11BG STA 1132.2.

In some embodiments, each subchannel is 80MHz 1008 with 4 x 20MHz subchannels. A size of the RA-subchannel, e.g., RA-SIG 1104 for the different versions may be different sizes, e.g., different multiples of 20MHz. As illustrated RA for 11BE SIG 1116 is 6 20 MHz subchannels, RA for 11BF SIG 1122 is 2 20 MHz subchannels, RA for 11BG SIG 1124 is 620 MHz subchannels, and RA for 11BX SIG 1126 is 2 20 MHz subchannels.

The size, e.g., number of 20 MHz subchannels, of the RA-SIG 1104 may depend on the number and categories or versions of the STAs 504 or clients scheduled in the PPDU 1100. For example, if most of the clients are IEEE 802.11be STAs 504, the RA-SIG 1104.

In some embodiments, the size of each RA-SIG 1104 or RA-subchannel could be fixed and predefined in the communications specification. e.g. RA-subchannel size for IEEE 802.11bf could be predetermined to be 80MHz, RA-subchannel size for IEEE 802.11bg is 120MHz, and so forth.

In some embodiments, the size of each RA-subchannel could also be adjustable and configurable. The configuration should be indicated before a STA parses or decodes the RA-SIG. For example, the configuration could be indicated in the U-SIG 1102 in RA-SIG configuration 1130, which can be decoded or parsed by all STAs 504 regardless of the WiFi generation or version. The RA-SIG configuration 1130 is repeated on each 80 MHz subchannel 1008 and indicates the 20MHz subchannels for the different versions of IEEE 802.11 to decode of the RA-SIG 1104.

In FIG. 11, the RA-SIG configuration 1130 indicates which 20 MHz channels a version of IEEE 802.11 should decode for the RA-SIG 1104, and then the RA-SIG 1104 indicates the RA for decoding the data 1106. In some embodiments, the RA-SIGs 1104 for the different STAs configured to operate with different versions of IEEE 802.11 have the same number of OFDMA symbols, such that the RA-SIG 1104 for different STAs 504 end at the same symbol.

The RA within the RA for 11BE SIG 1116, RA for 11BF SIG 1122, RA for 11BG SIG 1124, and RA for 11BX SIG 1126 includes an RA that includes frequency/time resource mapping for decoding data 1106. The frequency/time resource mapping is the same or similar as the format for HE-SIG-B structure as defined in IEEE 802.11ax. For example, if RA-subchannel is 20MHz, it follows the structure of 20MHz HE-SIG-B; if RA-subchannel is 80MHz, it follows the structure of 80MHz HE-SIG-B; and, so forth.

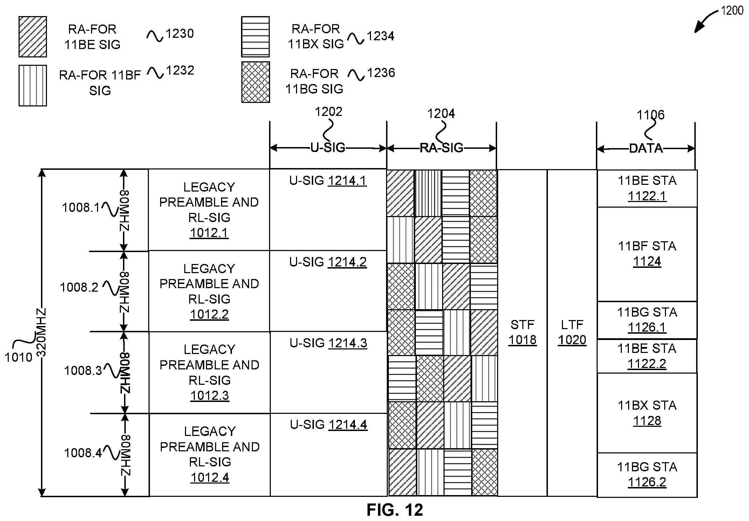

FIG. 12 illustrates a PPDU 1200, in accordance with some embodiments. Illustrated in FIG. 12 is RA-for 11BE SIG 1230, RA for 11BF SIG 1232, RA for 11BX SIG 1234, RA for 11BG SIG 1236, U-SIG 1202, and RA-SIG 1204. The RA is distributed within the RA-SIG 1204 as illustrated in FIG. 12, which may be termed distributed. The distributed mapping provides more diversity gain, which may decrease communication errors. In some embodiments, the RA-subchannel is a logical unit. The RA-SIG may be Nx20MHz in size, but the RA or frequency/time resources of each 20MHz is distributed across the whole bandwidth. In some embodiments, the mapping between the RA-subchannel and frequency/time resources should is predefined in communication standard. In some embodiments, the U-SIG 1214 includes information for determining how to decode the RA-SIG 1204. In some embodiments, a base frequency/time unit is defined, say 26 tones or 13 tones, then the RA information for each client should is carried by a multiple of the base unit. A larger number of based units can be assigned to a STA that requires better protection, e.g., a STA 504 with weaker link budget may receive more base units. A smaller number of base units can be assigned to a STA that requires less protection, e.g., a STA 504 with strong link budget. In addition, different IEEE 802.11 versions or WiFi versions are assigned a different number of base units to carry one RA information for one STA 504, in accordance with some embodiments.

The number of time/frequency resource in the RA SIG 1204 used for one STA 504 is configurable and the configuration depends on the WiFi generation and the link budget of the STA 504, in accordance with some embodiments.

In some embodiments, U-SIG 1202 comprises version bits that indicate the PPDU version. For example, if an IEEE 802.11be STA receives an IEEE 802.11bx PPDU, it will parse the version independent field in the U-SIG 1214 and determine the PPDU is an IEEE 802.11bx PPDU. Then the IEEE 802.11be STA will skip the version dependent field in the U-SIG 1214 and decode the corresponding RA-subchannel configured for IEEE 802.11be ST A 504, e.g., RA for 11BE SIG 1016, 1116, and 1230.

In some embodiments, some versions of IEEE 802.11 may not be included in the RA-SIG, which may be indicated in the U-SIG such as in RA-SIG configuration or in another field.

In some embodiments, the RA-SIG is an aggregated RA-SIG. In some embodiments, the RA of the RA-SIG is separated for the difference versions of IEEE 802.11 such as in different frequency-time blocks. These embodiments reduce the decoding complexity of the RA information contained in the RA-SIG 1204. However, the U-SIG 1102 may indicated which portion of the RA-SIG 1104 for the different versions to decode.

In some embodiments, the RA information for the different versions is aggregated together so that the different versions decode the RA information for all the versions. In some embodiments, the RA segments for different IEEE 802.11 versions is aggregated such that they share the same frequency-time block. For example, the segments are sequentially concatenated in payload bits, e.g., data 1106, and are sent to an LDPC encoder. The code bits are modulated and the modulated symbols are then distributed to and sent by the frequency-time block. For reducing the decoding complexity, each RA segment may have its IEEE 802.11 version indication so that an irrelevant receiver doesn't need to parse and interpret the segment. In some embodiments, for robustness, each RA segment may have its own CRC. In some embodiments, different portions of the RA segment such as common field and user specific fields may have their own CRCs. For enhancing diversity and received signal power, the code bits may be sent more than once, e.g. over two distributed subchannels. For example, the code bits may be sent over two RA subchannels in a similar manner as IEEE 802.11ax encodes SIG-B or over two OFDM symbols in a similar manner as IEEE 802.11ax encodes SIG-A. When the repetitions are done in the time domain, different inter-leavers may be used on different symbols, respectively for frequency domain diversity.

In some embodiments, the termination times of the RA-SIG 1004, 1104 are the same. In some embodiments, a dedicated RA transmission is used. In some embodiments, a first PPDU is transmitted that indicates the RA for the different versions of IEEE 802.11. A second PPDU is then transmitted with the data, which is decoded in accordance with the RA in the first PPDU.

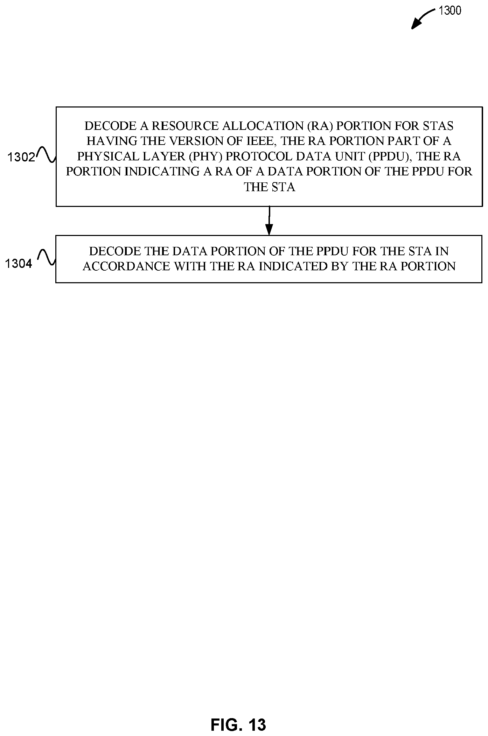

FIG. 13 illustrates a method 1300 for multi-version PPDUs, in accordance with some embodiments. The method 1300 may be performed by a STA 504 that is configured to operate in accordance with a version of IEEE 802.11, where the apparatus comprising memory, and processing circuitry coupled to the memory, where the processing circuitry configured to perform the method 1300.

The method 1300 begins at operation 1302 with decoding a RA portion for STAs having the version of IEEE that the STA is configured to operate in accordance with, the RA portion part of a PPDU, the RA portion indicating a RA of a data portion of the PPDU for the STA. For example, a STA 504 may decode PPDU 900, 1000, 1100, or 1200.

The method 1300 continues at operation 1304 with decoding the data portion of the PPDU for the STA in accordance with the RA indicated by the RA portion. For example, the STA 504 may decode RA-SIGA 904 and determine a RA for the STA in the PSDU 816. The RAs indicated in the RA-SIGA 904 may be organized by version of IEEE 802.11 and then have RAs for different STAs organized by a common field and an individual field for each STA.

In some embodiments, the method 1300 may include where the RA portion is a first RA portion and where the PPDU indicates a second RA portion for a different version of IEEE 802.11. For example, as disclosed in conjunction with FIGS. 9-12, RA-SIG 904, 1004, 1104, 1204, respectively, may include a RA for two or more versions of a communication standard such as IEEE 802.11.

In some embodiment, the method 1300 may include decoding a U-signal (U-SIGNAL) field, the U-SIG field indicating portions of a RA SIG for STAs to decode in accordance with versions of IEEE 802.11 the STAs are configured to operate in accordance with. For example as disclosed in conjunction with FIGS. 11 and 12, RA-SIG configuration 1130 may include an indication of which portions of RA-SIG 1104, 1204, respectively, that a STA 504 should decode to determine their RA within the data 1106, 1206, respectively, portion.

In some embodiments, the method 1300 may include where the PPDU is transmitted on a 80MHz, 160MHz, 320 MHz, 640 MHz, or 1.28 GHz PPDU and the STA is configured to decode a portion of the PPDU comprising the RA portion in accordance with a predetermined mapping between the version of the IEEE 802.11 and the portion of the PPDU.

The method 1300 may include additional operations. One or more of the operations of method 1300 may be optional. The operations of method 1300 may be performed in a different order.

In some embodiments, a WiFi 7 PPDU can transmit portions for WiFi 6, 7, 8, and so forth, so that an AP 502 can transmit data to STAs 504 configured to operate in accordance with WiFi 6, 7, 8, and so forth, simultaneously. In some embodiments, a MAC portion of a PPDU includes RA information for the STAs 504 operating in accordance with different versions of IEEE 802.11 to decode a data portion of one or more PPDUs. The PPDUs may be an orthogonal transmission. In some embodiments, a downlink (DL) trigger frame is transmitted first that indicates to the STAs 504 the RAs for their respective versions of IEEE 802.11 to decode. In some embodiments, the trigger frame is transmitted to other APs 502 and then to STAs 504.

The trigger frame may be termed a DL Multiplexing (MUX) trigger frame (DL MUX trigger frame). The one or more PPDUs are transmitted in accordance with OFDMA, in accordance with some embodiments. The DL Mux-trigger frame includes per STA RA information, in accordance with some embodiments. In some embodiments, the DL MUX trigger frame indicates on which subchannel a STA is supposed to parse or decode the RA information in accordance with a version of IEEE 802.11 of the STA. In some embodiments, a PHY portion of a PPDU includes the RAs for the STAs operating in accordance with different versions of IEEE 802.11. In some embodiments, a delimiter is used to indicate the last user field of the RA information for a version of IEEE 802.11.

In some embodiments, RA information is included in a MAC portion of the PPDU that enables OFDMA transmission with different versions of IEEE 802.11. In some embodiments, a DL trigger frame is transmitted first and then multiple PPDU are transmitted to the STAs in accordance with the version of IEEE 802.11 of the STA. In some embodiments, a single AP 502 DL trigger frame is transmitted one AP 502 to trigger DL transmission. In some embodiments, a multi-AP 502 DL trigger frame is transmitted to trigger multiple APs 502 in multi-AP operation, e.g., multi-AP C-OFDMA trigger frame, multi-AP joint transmission trigger frame, multi-AP compressed beamforming (CBF) trigger frame, and so forth.

In some embodiments, a single AP 502 trigger frame is transmitted to initiate a multiple version transmission that includes different versions of IEEE 802.11 such as WiFi 6, 7, 8, and so forth. In some embodiments, the trigger frame is termed a DL-Mux-trigger frame. The RA information is indicated in the DL-MUX-trigger frame, in accordance with some embodiments.

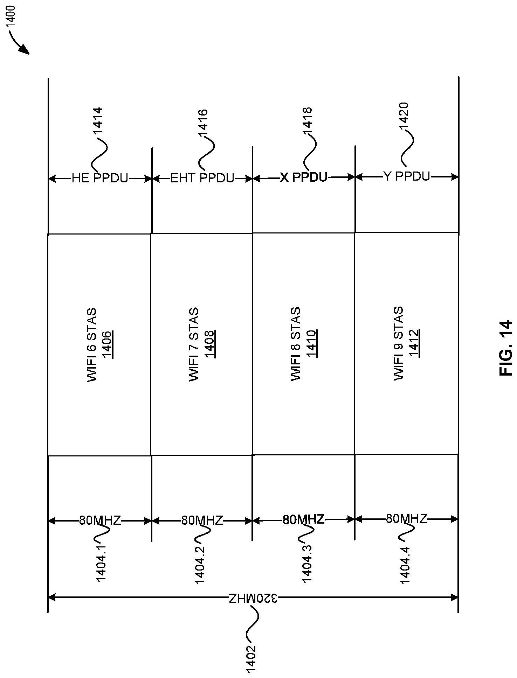

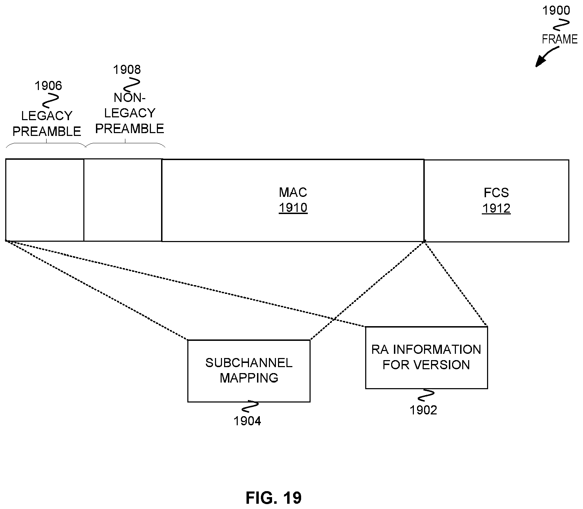

FIG. 14 illustrates subchannels 1400 for different versions of a communication protocol, in accordance with some embodiments. In some embodiments, the DL-Mux trigger frame indicates a resource mapping of subchannels, e.g., 20 MHz, 80 MHz, etc., and STAs 504 of different versions or generations decode the subchannel for their version or generation to determine their RA. For example, a DL-Mux trigger frame may indicate that 80MHz 1404.1 is for WiFi 6 STAs 1406 with a HE PPDU 1414, 80 MHz 1404.2 is for WiFi 7 STAs 1408 with a EHT PPDU 1416, 80 MHz 1404.3 is for WiFi 8 STAs 1410 with a X PPDU 1418, 80 MHz 1404.4 is for WiFi 9 STAs 1412 with a Y PPDU 1420. This may be for a 320 MHz 1402 channel. The STAs 504 decode the 80 MHz 1404 subchannel corresponding to their version or generation. The DL-Mux-trigger frame includes the information that are required to multiplex STAs of Wifi 6, 7, 8, and so forth, in one transmission. The subchannel mapping 1902 of FIG. 19 is an example of a mapping between subchannels and versions or generations.

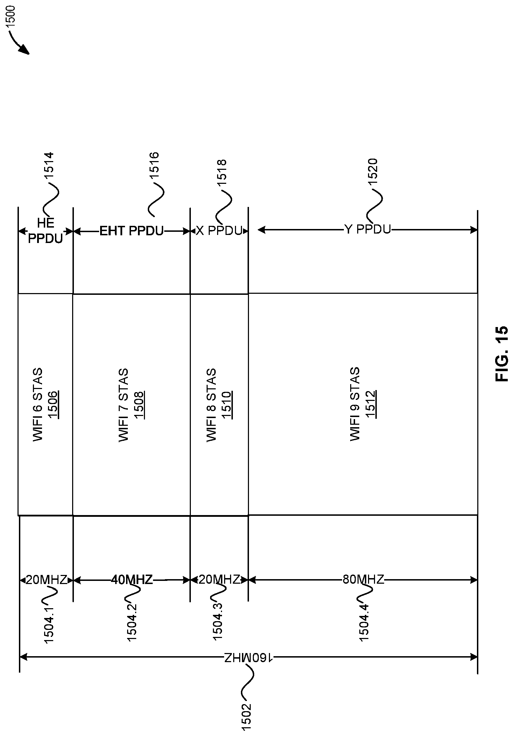

FIG. 15 illustrates subchannels 1500 for different versions of a communication protocol, in accordance with some embodiments. The subchannel mapping 1902 in a DL-Mux trigger frame may indicate that 20MHz 1504.1 is for WiFi 6 STAs 1506 with a HE PPDU 1514, 40 MHz 1504.2 is for WiFi 7 STAs 1508 with a EHT PPDU 1516, 20 MHz 1504.3 is for WiFi 8 STAs 1510 with a X PPDU 1518, 80 MHz 1504.4 is for WiFi 9 STAs 1512 with a Y PPDU 1520. This may be for a 160 MHz 1502 channel. The STAs 504 decode the subchannel corresponding to their version or generation. The DL-Mux-trigger frame includes the information that are required to multiplex STAs of WiFi 6, 7, 8, and so forth, in one transmission.

In some embodiments, the subchannel mapping 1902 maps one or more generations or versions. In some embodiments, the subchannel mapping 1902 maps 4 versions or generations on a per 20 MHz subchannel basis. In some embodiments, the subchannel mapping 1902 maps 4 versions or generations on a per 80 MHz subchannel basis. In some embodiments, the AP 502 is configured to determine the size of the subchannel for a version or generation based on the traffic needs or number of STAs 504 operating in accordance with the version or generation. For example, in 320MHz BSS, if the max number of versions or generations to be multiplexed in one transmission is 4, then 16 x 4 = 64 bits in total may be needed for the subchannel mapping 1902 to indicate for each 20 MHz subchannels which version or generation is allocated that 20 MHz subchannel. In another encoding, 32 bits may be used with 2 bits to indicate the version or generation where the 2 bits are repeated 16 times for each 20 MHz subchannel.

The DL-Mux-trigger frame, e.g., frame 1900, is transparent to the STAs 504 configured to operate in accordance with IEEE 802.11ax because they will not be able to decode the frame 1900 and will defer for the duration of the transmission of the trigger frame. STAs 504 configured to operate in accordance with IEEE 802.11ax camp on and process PPDUs on the primary channel so that the STA 504 may decode the HE PPDUs 1414, 1514.

A different PPDU is transmitted for each version or generation of WiFi. For example, HE PPDU 1414, 1514, EHT PPDU 1416, 1516, X PPDU 1418, 1518, and Y PPDU 1420, 1520, are transmitted in FIGS. 14 and 15, respectively. In some embodiments, these PPDUs are DL trigger based PPDU (DL TB-PPDU). These PPDUs are transmitted to be orthogonal to each other to avoid interference. In order to meet the orthogonality requirements, the PPDUs are transmitted by the AP 502 with 1) the OFDM symbol boundary from different PPDUs aligned and with the difference of the start of transmissions for different DL TB-PPDUs within the window of a guard interval (GI), e.g. 0.8µs.

In some embodiments, the DL-Mux-trigger frame includes per STA RA information. In some embodiments, the DL-Mux-trigger frame includes the RA information for all the STAs 504. Each STA 504 is included in the RA information in the DL-MUX-trigger frame. The resources include frequency resource, time duration, spatial stream for the DL TB-PPDU. In some embodiments STAs 504 do not need to parse the preamble of the version specific PPDUs to get the RA information. In some embodiments, the version specific PPDUs are termed DL TB-PPDU. DL TB-PPDUs may be similar to HE TB PPDU of IEEE 802.11ax, because EHT-SIG, which include the RA information for DL transmission, is not

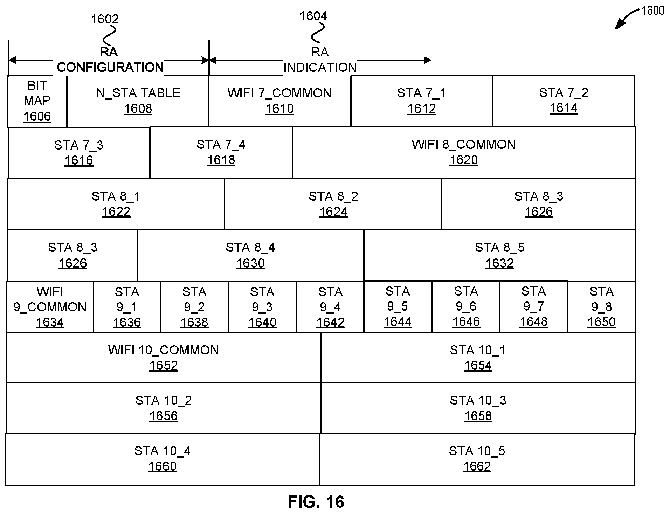

FIG. 16 illustrates resource allocation (RA) information 1600, in accordance with some embodiments. The RA information 1600 for all STAs of different WiFi versions or generations are included in the trigger frame. In some embodiments, RA configuration field 1602 comprises a bit map 1606 and a N_STA table 1608. The bit map 1606 may include a bit for each version or generation and where a bit for a version or generation indicates whether the RA information 1600 includes information for that version or generation. Table 1 is an example of bit map 1606.

| TABLE 1 | |
|---|---|
| BIT | WIFI VERSION |
| B1 | WiFi 6 STAs presented in the current transmission (RA information 1600) |
| B2 | WiFi 7 STAs presented in the current transmission (RA information 1600) |
| B3 | WiFi 8 STAs presented in the current transmission (RA information 1600) |
| B4 | WiFi 9 STAs presented in the current transmission (RA information 1600) |

N_STA table 1608 indicates the number of STAs 504 included in the RA information 1600 and scheduled by the DL-Mux-trigger frame for each WiFi generation. For instance, 5 bits can be used to indicate a maximum of 32 scheduled STAs per version or generation. So, in this example, N_STA table 1608 would be 20 bits if the maximum number of multiplexed versions or generations is 4 and the maximum number of STAs 504 per version or generation is 32.

The RA information 1600 for each version or generation is mapped to the frequency time resource with increasing order, in accordance with some embodiments. For example, RA indication 1604 may include WIFI 7_common 1610, STA 7_1 1612, STA 7_2 1614, STA 7_3 1616, STA 7_4 1618, WIFI 8_common 1620, STA 8_1 1622, STA 8_2 1624, STA 8_3 1626, STA 8_4 1630, STA 8_5 1632, WIFI 9_common 1634, STA 9_1 1636, STA 9_2 1638, STA 9_3 1640, STA 9_4 1642, STA 9_5 1644, STA 9_6 1646, STA 9_7 1648, STA 9_8 1650, WIFI 10_common 1652, STA 10_1 1654, STA 10_2 1656, STA 10_3 1658, STA 10_4 1660, and STA 10_5 1662. In some embodiments, the earlier versions or generations come before the later versions or generations. For example, WiFi 7 RA may be first followed by WiFi 8 RA, WiFi 9 RA, WiFi 10 RA, and so on.

The RA indication 1604 per version or generation includes a common portion and then a per STA 504 portion. The size of the common field and the size of one user field may be different between different versions or generations. The size of the common field and the size of one user field is predefined for each version or generation, in accordance with some embodiments. A WiFi 7 STA can calculate the total number of bits for WiFi 7 RA information based on the RA configuration field. WiFi 8 STAs can calculate the total number of RA information for both WiFi 7 and WiFi 8. So, WiFi 8 STAs can skip the WiFi 7 RA information and parse the WiFi 8 RA information correctly. And so forth. The later versions or generations know the size of the common and per STA fields of earlier versions or generations so they can determine where in the RA information 1600 their information begins.

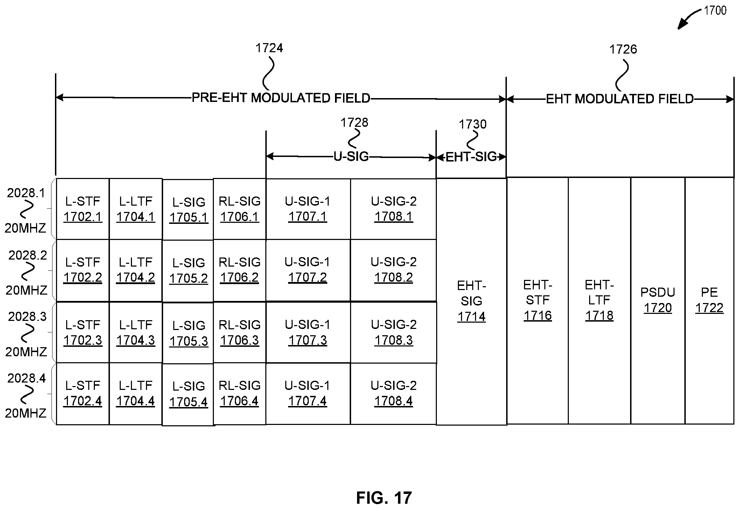

FIG. 17 illustrates a PPDU 1700, in accordance with some embodiments. Illustrated in FIG. 17 is L-STF 1702, L-LTF 1704, L-SIG 1705, RL-SIG 1706, U-SIG-1 1707, U-SIG-2 1708, EHT-SIG 1714, EHT-STF 1716, EHT-LTF 1718, PSDU 1720, PE 1722, U-SIG 1728, EHT-SIG 1730, 20 MHz 2028.1 through 20 MHz 2028.4, pre-EHT modulated field 1724,U-SIG 1728, EHT-SIG 1730, and EHT modulated field 1726. The U-SIG-1 1707, U-SIG-2, and the EHT-SIG 1714 includes information for decoding the PSDU 1720 and may include information regarding the EHT-STF 1716 and EHT-LTF 1718 such as the duration of the transmission.

The legacy preamble, U-SIG-1 1707, and U-SIG-2 1708 are transmitted on each 20 MHz channel 2028. The EHT-SIG 1714, EHT-STF 1716, EHT-LTF 1718, PSDU 1720, and PE 1722 are transmitted on the entire 80 MHz channel, in accordance with some embodiments. The PPDU 1700 may be transmitted in accordance with IEEE 802.11be/EHT.

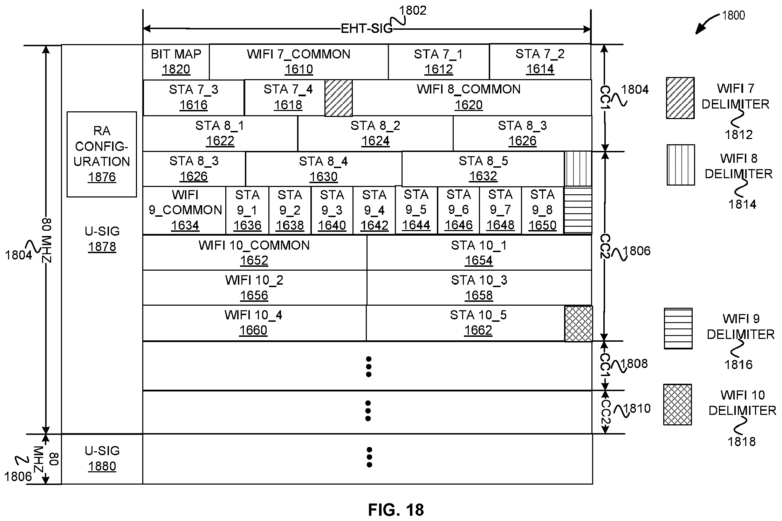

FIG. 18 illustrates RA information 1800, in accordance with some embodiments. The RA information 1800 for all STAs of different WiFi versions or generations are included in a preamble portion of a PPDU, e.g., within the EHT-SIG 1802 or another SIG.

In some embodiments, a non-AP STA 504 only needs to process the pre-EHT modulated fields for up to 80MHz 1804 even if the PPDU is larger than 80MHz to determine their RA. There are two content channels CC1 1804, CC2 1806, in 80MHz each of which is modulated in 20MHz subchannels. There are two copies for each content channel in one 80MHz, e.g., as illustrated CC1 1804 is 20 MHz and copied with CC1 1808, and CC2 1806 is 20 MHz and is copied with CC2 1810. The RA information 1800 may assign any RU to a STA 504 within the bandwidth supported by the STA 504.

The RA configuration 1876 field and bit map 1820 field may be part of the U-SIG 1878 and/or EHT-SIG 1802. The bit map 1820 may be the same or similar as bit map 1606. WIFI 7_common 1610, STA 7_1 1612, STA 7_2 1614, STA 7_3 1616, STA 7_4 1618, WIFI 8_common 1620, STA 8_1 1622, STA 8_2 1624, STA 8_3 1626, STA 8_4 1630, STA 8_5 1632, WIFI 9_common 1634, STA 9_1 1636, STA 9_2 1638, STA 9_3 1640, STA 9_4 1642, STA 9_5 1644, STA 9_6 1646, STA 9_7 1648, STA 9_8 1650, WIFI 10_common 1652, STA 10_1 1654, STA 10_2 1656, STA 10_3 1658, STA 10_4 1660, and STA 10_5 1662 may be the same or similar as disclosed in conjunction with FIG. 18. In some embodiments, the earlier versions or generations come before the later versions or generations. For example, WiFi 7 RA may be first followed by WiFi 8 RA, WiFi 9 RA, WiFi 10 RA, and so on.

In some embodiments, N_STA table 1608 is included in the U-SIG 1878 or EHT-SIG 1802. In some embodiments, RA information 1800 does not include a N_STA table, but uses delimiters, e.g., WiFi 7 delimiter 1812, WiFi 8 delimiter 1814, WiFi 9 delimiter 1816, and WiFi 10 delimiter 1818. This saves the space of including the N_STA table.

If this table is eliminated, the STA 504 needs to determine the last user field for a specific WiFi generation. The delimiters in FIG. 18 are added after the last user field of each WiFi generation. The delimiters may be a CRC mask that can be applied on the CRC of the last user field in each WiFi generation. The mask sequence may be WiFi generation specific. For example, the mask may be different for each WiFi generation. A WiFi 7 STA 504 can determine that STA 7_4 1618 is the last user field of WiFi 7 from the WiFi 7 delimiter 1812. A WiFi 8 STA 504 can determine that STA 7_4 1618 is the last user field of WiFi 7 by WiFi 7 delimiter 1812 and STA 8_5 is the last user field of WiFi 8 by WiFi 8 delimiter 1814, and so forth for WiFi 9 and WiFi 10 STAs 504.

In some embodiments, the number of user fields for every WiFi generation is indicated by 5 bits in a similar manner as disclosed in conjunction with FIG. 16, which provides a maximum of 32 user fields per WiFi generation. In some embodiments, the field indicating the number of user fields is separate such as right before the common field, after the common field, or in another place. In some embodiments, user fields are considered in blocks so that fewer bits may be used to indicate the number of user fields. For example, if one user block includes 4 user fields, 3 bits instead of 5 bits are required to indicate a maximum of 32 user fields. If the number of user fields in one user block is less than 4, the delimiter may be used to indicate the early termination of the user block. The information in 80 MHz subchannel 1804 may be repeated one or more times such as in 80 MHz subchannel 1806.

The RA information 1600, 1800 may be included in either a MAC portion of the PPDU or the PHY portion of the PPDU. The RA information 1600, 1800 may be included in a pre-EHT modulated portion of the preamble or PHY portion, in accordance with some embodiments. The RA information 1600, 1800 may be in a PHY portion of the PPDU that indicates RUs for the STAs 504 to decode in a PSDU portion of the same PPDU where the PSDU portions are modulated in accordance with the WiFi version or generation and are symbol aligned for the beginning of the PSDU transmissions.

FIG. 19 illustrates a frame 1900, in accordance with some embodiments. Illustrated in FIG. 19 is legacy preamble 1906, non-legacy preamble 1908, subchannel mapping 1904, RA information for version 1902, MAC 1910, and FCS 1912. The subchannel mapping 1902 is a mapping between subchannels and versions or generations. The subchannel mapping 1904 may be included in legacy preamble 1906 portion such as the EHT-SIG, in the non-legacy preamble 1908 portion, or in the MAC 1910 of the frame 1900. The RA information for version 1902 may include the per station RA, the bit map, and/or the N_STA table, e.g., 1608, and may be included in legacy preamble 1906 portion such as the EHT-SIG, in the non-legacy preamble 1908 portion, or in the MAC 1910 of the frame 1900. The frame 1900 may be a trigger frame or may be a PPDU with the RA information indicating RU for stations of different versions or generations. The MAC 1910 may be multiple PSDU transmitted in accordance with different versions or generations of WiFi. WiFi is synonymous with IEEE 802.11, in accordance with some embodiments. In some embodiments, the trigger frame includes a bit map and the corresponding PPDU that is transmitted in accordance with a version or generation includes the RAs for the STAs 504 configured for that version or generation.

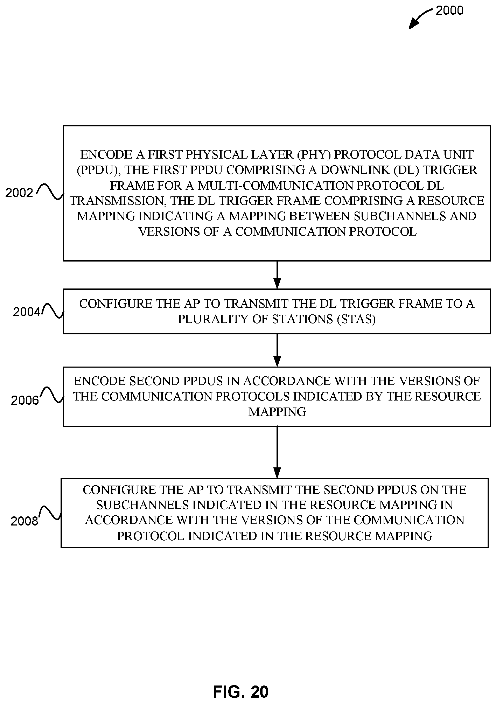

FIG. 20 illustrates a method 2000 for forward compatible OFDMA transmission, in accordance with some embodiments. The method 2000 begins at operation 2002 with encoding a first physical layer (PHY) protocol data unit (PPDU), the first PPDU comprising a downlink (DL) trigger frame for a multi-communication protocol DL transmission, the DL trigger frame comprising a resource mapping indicating a mapping between subchannels and versions of a communication protocol. For example, frame 1900 may be encoded by an AP 502. The frame 1900 may include a bit map 1606, 1820. The frame 1900 may include RA 1600, 1800.

The method 2000 continues at operation 2004 with configuring the AP to transmit the DL trigger frame to a plurality of STA. For example, an apparatus of the AP 502 may configure the AP 502 to transmit the frame 1900 to STAs 504.

The method 2000 continues at operation 2006 with encoding second PPDUs in accordance with the versions of the communication protocols indicated by the resource mapping. For example, AP 502 may encode HE PPDU 1414, 1514, EHT PPDU 1416, 1516, X PPDU 1418, 1518, and Y PPDU 1420, 1520.

The method 2000 continues at operation 2008 with configuring the AP to transmit the second PPDUs on the subchannels indicated in the resource mapping in accordance with the versions of the communication protocol indicated in the resource mapping. For example, an apparatus of AP 502 may configure the AP 502 to transmit the second PPDUs in accordance with the 80 MHz 1404, 1504 subchannels that are assigned to the different versions or generations of IEEE 802.11.

The method 2000 may include one or more additional operations. One or more of the operations of method 2000 may be optional. The operations of method 2000 may be performed in a different order.

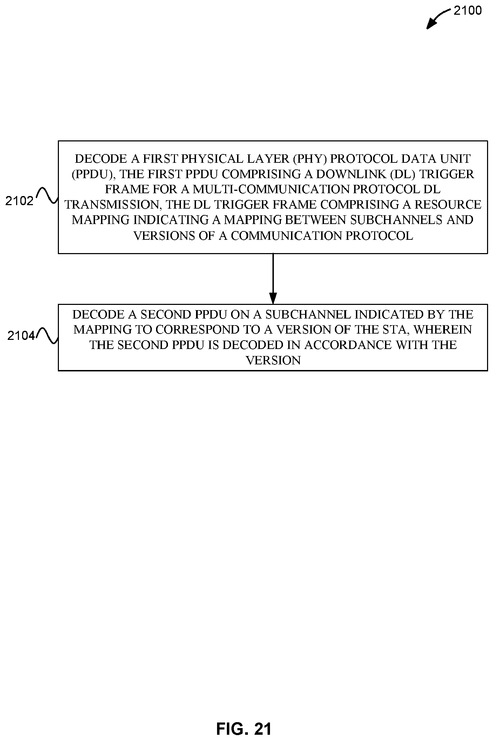

FIG. 21 illustrates a method 2100 for forward compatible OFDMA transmission, in accordance with some embodiments. The method 2100 begins at operation 2102 with decoding a first physical layer (PHY) protocol data unit (PPDU), the first PPDU comprising a downlink (DL) trigger frame for a multi-communication protocol DL transmission, the DL trigger frame comprising a resource mapping indicating a mapping between subchannels and versions of a communication protocol. For example, STA 504 may decode frame 1900. The frame 1900 may include a bit map 1606, 1820. The frame 1900 may include RA information 1600, 1800.

The method 2100 continues at operation 2104 with decoding a second PPDU on a subchannel indicated by the mapping to correspond to a version of the STA, where the second PPDU is decoded in accordance with the version. For example, STA 504 may decode HE PPDU 1414, 1514, EHT PPDU 1416, 1516, X PPDU 1418, 1518, and Y PPDU 1420, 1520, in accordance with the version or generation of IEEE 802.11 the STA 504 is operating in accordance with. The subchannels may be smaller or larger than 80 MHz and, in some embodiments, the subchannels may be non-contiguous.

The method 2100 may include one or more additional operations. One or more of the operations of method 2100 may be optional. The operations of method 2100 may be performed in a different order.

## Claims

1. An apparatus of an access point, AP, (502; 700) the apparatus comprising:
memory (604, 606; 710); and
processing circuitry (602; 708) coupled to the memory, the processing circuitry configured to:
encode a first physical layer, PHY, protocol data unit, PPDU, the first PPDU comprising a downlink, DL, trigger frame for a multi-communication protocol DL transmission, the DL trigger frame comprising a resource mapping indicating a mapping between subchannels and versions of a communication protocol;
configure the AP to transmit the first PPDU including the DL trigger frame to a plurality of stations, STAs;
encode second PPDUs in accordance with the versions of the communication protocols indicated by the resource mapping; and
configure the AP to transmit the second PPDUs on the subchannels indicated in the resource mapping in accordance with the versions of the communication protocol indicated in the resource mapping.

2. The apparatus of claim 1 wherein the mapping between subchannels and communication protocol versions indicates which subchannels the plurality of STAs are to be decoded to determine a resource allocation, RA, with the second PPDUs.

3. The apparatus of claim 1 or claim 2 wherein the second PPDUs comprise data for the plurality of STAs.

4. The apparatus of claim 1 wherein the resource mapping comprises an indication of a version of the communication protocol of the versions of the communication protocol for each 20 MHz subchannel.

5. The apparatus of any one of the preceding claims, wherein configuring the AP to transmit the second PPDUs further comprises:
configuring the AP to transmit the second PPDUs on the subchannels indicated in the resource mapping in accordance with the communication protocols of the second PPDUs and aligned on orthogonal frequency division multiplexing, OFDM, symbol boundaries.

6. The apparatus of claim 5 wherein configuring the AP to transmit the second PPDUs further comprises:
configuring the AP to transmit the second PPDUs with a difference between a start of transmissions of the second PPDUs within a guard interval duration.

7. The apparatus of any of claims 1-5 wherein encoding the first PPDU further comprises:
encoding the DL trigger frame to further comprise resource allocations, RAs, for the plurality of STAs within the second PPDUs, wherein the RAs comprise frequency allocations, time durations, spatial stream allocations, and wherein the frequency allocation is within a subchannel of the subchannels allocated to a version of the communication protocol which a STA of the plurality of STAs is configured to operate in accordance with.

8. The apparatus of claim 7 wherein each of the versions of the communication protocol has a separate RA of the RAs, the separate RA divided into a common field and a user field for each STA of the plurality of STAs configured to operate in accordance with a corresponding communication protocol.

9. The apparatus of claim 8 wherein the RAs further comprise a bit map, the bit map indicating whether a communication protocol of the communication protocols is present in the RAs, and a STA table, the STA table indicating a number of STAs for each communication protocol indicated as present in the bit map.

10. The apparatus of claim 8 or claim 9, wherein the RAs are separated by cyclic redundancy check, CRC, masks.

11. The apparatus of any of claims 1-10, further comprising a direct conversion mixer (302), the direct conversion mixer configured to directly downconvert radio frequency, RF, signals to baseband signals, wherein the processing circuitry is configured to decode the baseband signals, the baseband signals including the DL trigger frame; or, further comprising: a super-heterodyne mixer, the super-heterodyne mixer configured to downconvert RF signals to intermediate frequency signals prior to generation of baseband signals, wherein the processing circuitry is configured to decode the baseband signals, the baseband signals including the DL trigger frame.

12. A computer-readable storage medium that stores instructions for execution by one or more processors of an apparatus of an access point, AP, the instructions to configure the one or more processors to:
encode a first physical layer, PHY, protocol data unit, PPDU, the first PPDU comprising a downlink, DL, trigger frame for a multi-communication protocol DL transmission, the DL trigger frame comprising a resource mapping indicating a mapping between subchannels and versions of a communication protocol;
configure the AP to transmit the first PPDU including the DL trigger frame to a plurality of stations, STAs;
encode second PPDUs in accordance with the versions of the communication protocols indicated by the resource mapping; and
configure the AP to transmit the second PPDUs on the subchannels indicated in the resource mapping in accordance with the versions of the communication protocol indicated in the resource mapping.

13. The computer-readable storage medium of claim 12 wherein the mapping between subchannels and communication protocol versions indicates which subchannels the plurality of STAs are to be decoded to determine a resource allocation, RA, with the second PPDUs.

14. A method performed by an apparatus of an access point, AP, the method comprising:
encoding (2002) a first physical layer, PHY, protocol data unit, PPDU, the first PPDU comprising a downlink, DL, trigger frame for a multi-communication protocol DL transmission, the DL trigger frame comprising a resource mapping indicating a mapping between subchannels and versions of a communication protocol;
configuring (2004) the AP to transmit the first PPDU including the DL trigger frame to a plurality of stations, STAs;
encoding (2006) second PPDUs in accordance with the versions of the communication protocols indicated by the resource mapping; and
configuring (2008) the AP to transmit the second PPDUs on the subchannels indicated in the resource mapping in accordance with the versions of the communication protocol indicated in the resource mapping.

15. The method of claim 14 wherein the mapping between subchannels and communication protocol versions indicates which subchannels the plurality of STAs are to be decoded to determine a resource allocation, RA, with the second PPDUs.

## Patentansprüche

1. Einrichtung eines Zugangspunkts, AP, (502; 700), die Einrichtung umfassend:
Speicher (604, 606; 710) und
eine Verarbeitungsschaltungsanordnung (602; 708), die mit dem Speicher gekoppelt ist, wobei die Verarbeitungsschaltungsanordnung ausgelegt ist zum:
Codieren einer ersten Protokolldateneinheit einer physikalischen Schicht, PHY-PPDU, die erste PPDU umfassend einen Downlink-Auslöseframe, DL-Auslöseframe, für eine Multikommunikationsprotokoll-DL-Übertragung, der DL-Auslöseframe umfassend eine Ressourcenabbildung, die eine Abbildung zwischen Unterkanälen und Versionen eines Kommunikationsprotokolls angibt;
Konfigurieren des AP zum Übertragen der ersten PPDU, einschließlich des DL-Auslöseframes an eine Vielzahl von Stationen, STAs;
Codieren von zweiten PPDUs gemäß den Versionen des Kommunikationsprotokolls, die durch die Ressourcenabbildung angegeben sind; und
Konfigurieren des AP zum Übertragen der zweiten PPDUs auf den Unterkanälen, die in der Ressourcenabbildung angegeben sind, gemäß den Versionen des Kommunikationsprotokolls, die in der Ressourcenabbildung angegeben sind.

2. Einrichtung nach Anspruch 1, wobei die Abbildung zwischen Unterkanälen und Kommunikationsprotokollversionen angibt, welche Unterkanäle der Vielzahl von STAs decodiert werden sollen, um eine Ressourcenzuordnung, RA, mit den zweiten PPDUs zu bestimmen.

3. Einrichtung nach Anspruch 1 oder Anspruch 2, wobei die zweiten PPDUs Daten für die Vielzahl von STAs umfassen.

4. Einrichtung nach Anspruch 1, wobei die Ressourcenzuordnung eine Angabe einer Version des Kommunikationsprotokolls der Versionen des Kommunikationsprotokolls für jeden 20-MHz-Unterkanal umfasst.

5. Einrichtung nach einem der vorhergehenden Ansprüche, wobei das Konfigurieren des AP zum Übertragen der zweiten PPDUs ferner umfasst:
Konfigurieren des AP zum Übertragen der zweiten PPDUs auf den Unterkanälen, die in der Ressourcenzuordnung angegeben sind, gemäß den Kommunikationsprotokollen der zweiten PPDUs und ausgerichtet an Symbolgrenzen eines orthogonalen Frequenzmultiplexverfahrens, OFDM-Symbolgrenzen.

6. Einrichtung nach Anspruch 5, wobei das Konfigurieren des AP zum Übertragen der zweiten PPDUs ferner umfasst: Konfigurieren des AP zum Übertragen der zweiten PPDUs mit einem Unterschied zwischen einem Start von Übertragungen der zweiten PPDUs innerhalb einer Schutzintervalldauer.

7. Einrichtung nach einem der Ansprüche 1-5, wobei das Codieren der ersten PPDU ferner umfasst:
Codieren des DL-Auslöseframes, sodass er ferner Ressourcenzuordnungen, RAs, für die Vielzahl von STAs innerhalb der zweiten PPDUs umfasst, wobei die RAs Frequenzzuordnungen, Zeitdauern, Zuordnungen räumlicher Ströme umfassen und wobei die Frequenzzuordnung innerhalb eines Unterkanals der Unterkanäle ist, die einer Version des Kommunikationsprotokolls zugeordnet sind, für die eine STA der Vielzahl von STAs dazu ausgelegt ist, gemäß dieser betrieben zu werden.

8. Einrichtung nach Anspruch 7, wobei jede der Versionen des Kommunikationsprotokolls eine separate RA der RAs aufweist, wobei die separate RA in ein gemeinsames Feld und ein Benutzerfeld für jede STA der Vielzahl von STAs, die zum Betrieb gemäß einem entsprechenden Kommunikationsprotokoll ausgelegt sind, geteilt ist.

9. Einrichtung nach Anspruch 8, wobei die RAs ferner eine Bitmap, wobei die Bitmap angibt, ob ein Kommunikationsprotokoll der Kommunikationsprotokolle in den RAs vorhanden ist, und eine STA-Tabelle, wobei die STA-Tabelle eine Anzahl von STAs für jedes Kommunikationsprotokoll angibt, das als in der Bitmap vorhanden angegeben ist, umfassen.

10. Einrichtung nach Anspruch 8 oder Anspruch 9, wobei die RAs durch Masken einer zyklischen Redundanzprüfung, CRC-Masken, getrennt sind.

11. Einrichtung nach einem der Ansprüche 1-10, ferner umfassend einen Direktumwandlungsmischer (302), wobei der Direktumwandlungsmischer zum direkten Abwärtswandeln von Hochfrequenzsignalen, HF-Signalen, in Basisbandsignale ausgelegt ist, wobei die Verarbeitungsschaltungsanordnung zum Decodieren der Basisbandsignale ausgelegt ist, die Basisbandsignale einschließlich des DL-Auslöseframes; oder ferner umfassend: einen Super-Heterodyne-Mischer, wobei der Super-Heterodyne-Mischer zum Abwärtswandeln von HF-Signalen in Zwischenfrequenzsignale vor der Erzeugung von Basisbandsignalen ausgelegt ist, wobei die Verarbeitungsschaltungsanordnung zum Decodieren der Basisbandsignale ausgelegt ist, die Basisbandsignale einschließlich des DL-Auslöseframes.

12. Computerlesbares Speichermedium, das Anweisungen zur Ausführung durch einen oder mehrere Prozessoren einer Einrichtung eines Zugangspunkts, AP, speichert, wobei die Anweisungen den einen oder die mehreren Prozessoren konfigurieren sollen zum:
Codieren einer ersten Protokolldateneinheit einer physikalischen Schicht, PHY-PPDU, die erste PPDU umfassend einen Downlink-Auslöseframe, DL-Auslöseframe, für eine Multikommunikationsprotokoll-DL-Übertragung, der DL-Auslöseframe umfassend eine Ressourcenabbildung, die eine Abbildung zwischen Unterkanälen und Versionen eines Kommunikationsprotokolls angibt;
Konfigurieren des AP zum Übertragen der ersten PPDU, einschließlich des DL-Auslöseframes an eine Vielzahl von Stationen, STAs;
Codieren von zweiten PPDUs gemäß den Versionen des Kommunikationsprotokolls, die durch die Ressourcenabbildung angegeben sind; und
Konfigurieren des AP zum Übertragen der zweiten PPDUs auf den Unterkanälen, die in der Ressourcenabbildung angegeben sind, gemäß den Versionen des Kommunikationsprotokolls, die in der Ressourcenabbildung angegeben sind.

13. Computerlesbares Speichermedium nach Anspruch 12, wobei die Abbildung zwischen Unterkanälen und Kommunikationsprotokollversionen angibt, welche Unterkanäle der Vielzahl von STAs decodiert werden sollen, um eine Ressourcenzuordnung, RA, zu den zweiten PPDUs zu bestimmen.

14. Verfahren, das durch eine Einrichtung eines Zugangspunkts, AP, durchgeführt wird, das Verfahren umfassend:
Codieren (2002) einer ersten Protokolldateneinheit einer physikalischen Schicht, PHY-PPDU, die erste PPDU umfassend einen Downlink-Auslöseframe, DL-Auslöseframe, für eine Multikommunikationsprotokoll-DL-Übertragung, der DL-Auslöseframe umfassend eine Ressourcenabbildung, die eine Abbildung zwischen Unterkanälen und Versionen eines Kommunikationsprotokolls angibt;
Konfigurieren (2004) des AP zum Übertragen der ersten PPDU, einschließlich des DL-Auslöseframes an eine Vielzahl von Stationen, STAs;
Codieren (2006) von zweiten PPDUs gemäß den Versionen des Kommunikationsprotokolls, die durch die Ressourcenabbildung angegeben sind; und
Konfigurieren (2008) des AP zum Übertragen der zweiten PPDUs auf den Unterkanälen, die in der Ressourcenabbildung angegeben sind, gemäß den Versionen des Kommunikationsprotokolls, die in der Ressourcenabbildung angegeben sind.

15. Verfahren nach Anspruch 14, wobei die Abbildung zwischen Unterkanälen und Kommunikationsprotokollversionen angibt, welche Unterkanäle der Vielzahl von STAs decodiert werden sollen, um eine Ressourcenzuordnung, RA, zu den zweiten PPDUs zu bestimmen.

## Revendications

1. Appareil d'un point d'accès (AP) (502 ; 700) comprenant :
une mémoire (604, 606 ; 710) ; et
un circuit de traitement (602 ; 708) couplé à la mémoire, le circuit de traitement étant configuré pour :
coder une première unité de données de protocole, PPDU, de la couche physique, PHY, la première PPDU comprenant une trame de déclenchement de liaison descendante, DL, pour une transmission DL à protocole de communication multiple, la trame de déclenchement DL comprenant un mappage de ressources indiquant un mappage entre les sous-canaux et les versions d'un protocole de communication ;
configurer l'AP pour qu'il transmette la première PPDU, y compris la trame de déclenchement DL, à une pluralité de stations, STA ;
coder les deuxièmes PPDU conformément aux versions des protocoles de communication indiquées par le mappage des ressources ; et
configurer l'AP pour qu'il transmette les deuxièmes PPDU sur les sous-canaux indiqués dans le mappage des ressources, conformément aux versions du protocole de communication indiquées dans le mappage des ressources.

2. Appareil selon la revendication 1, dans lequel le mappage entre les sous-canaux et les versions du protocole de communication indique quels sous-canaux de la pluralité de STA doivent être décodés pour déterminer une allocation de ressources, RA, avec les deuxièmes PPDU.

3. Appareil selon la revendication 1 ou la revendication 2, dans lequel les deuxièmes PPDU comprennent des données pour la pluralité de STA.

4. Appareil selon la revendication 1, dans lequel le mappage des ressources comprend une indication d'une version du protocole de communication parmi les versions du protocole de communication pour chaque sous-canal de 20 MHz.

5. Appareil selon l'une quelconque des revendications précédentes, dans lequel la configuration de l'AP pour transmettre les deuxièmes PPDU comprend en outre l'étape suivante :
configurer l'AP pour qu'il transmette les deuxièmes PPDU sur les sous-canaux indiqués dans le mappage des ressources, conformément aux protocoles de communication des deuxièmes PPDU et alignées sur les limites des symboles du multiplexage par répartition orthogonale de la fréquence, OFDM.

6. Appareil selon la revendication 5, dans lequel la configuration de l'AP pour transmettre les deuxièmes PPDU comprend en outre l'étape suivante :
configurer l'AP pour qu'il transmette les deuxièmes PPDU avec une différence entre le début des transmissions des deuxièmes PPDU dans une durée d'intervalle de garde.

7. Appareil selon l'une quelconque des revendications 1 à 5, dans lequel le codage de la première PPDU comprend en outre l'étape suivante :
coder la trame de déclenchement DL pour comprendre en outre des allocations de ressources, RA, pour la pluralité de STA dans les deuxièmes PPDU, les RA comprenant des allocations de fréquence, des durées, des allocations de flux spatial, et l'allocation de fréquence se trouvant dans un sous-canal des sous-canaux alloués à une version du protocole de communication conformément à laquelle une STA de la pluralité de STA est configurée pour fonctionner.

8. Appareil selon la revendication 7, dans lequel chacune des versions du protocole de communication a une RA séparée des RA, la RA séparée étant divisée en un champ commun et un champ utilisateur pour chaque STA de la pluralité de STA configurée pour fonctionner conformément à un protocole de communication correspondant.

9. Appareil selon la revendication 8, dans lequel les RA comprennent en outre une carte de bits, la carte de bits indiquant si un protocole de communication des protocoles de communication est présent dans les RA, et une table STA, la table STA indiquant un nombre de STA pour chaque protocole de communication indiqué comme étant présent dans la carte de bits.

10. Appareil selon la revendication 8 ou la revendication 9, dans lequel les RA sont séparées par des masques de contrôle de redondance cyclique, CRC.

11. Appareil selon l'une quelconque des revendications 1 à 10, comprenant en outre un mélangeur à conversion directe (302), le mélangeur à conversion directe étant configuré pour convertir directement, à la baisse, les signaux radiofréquences, RF, en signaux de bande de base, le circuit de traitement étant configuré pour décoder les signaux de bande de base, les signaux de bande de base comprenant la trame de déclenchement DL ; ou comprenant en outre : un mélangeur superhétérodyne, le mélangeur superhétérodyne étant configuré pour convertir à la baisse les signaux RF en signaux de fréquence intermédiaire avant de générer des signaux de bande de base, le circuit de traitement étant configuré pour décoder les signaux de bande de base, les signaux de bande de base comprenant la trame de déclenchement DL.

12. Support de stockage lisible par ordinateur qui stocke des instructions pour exécution par un ou plusieurs processeurs d'un appareil d'un point d'accès, AP, les instructions étant destinées à configurer les un ou plusieurs processeurs pour :
coder une première unité de données de protocole, PPDU, de la couche physique, PHY, la première PPDU comprenant une trame de déclenchement de liaison descendante, DL, pour une transmission DL à protocole de communication multiple, la trame de déclenchement DL comprenant un mappage de ressources indiquant un mappage entre les sous-canaux et les versions d'un protocole de communication ;
configurer l'AP pour qu'il transmette la première PPDU, y compris la trame de déclenchement DL, à une pluralité de stations, STA ;
coder les deuxièmes PPDU conformément aux versions des protocoles de communication indiquées par le mappage des ressources ; et
configurer l'AP pour qu'il transmette les deuxièmes PPDU sur les sous-canaux indiqués dans le mappage des ressources, conformément aux versions du protocole de communication indiquées dans le mappage des ressources.

13. Support de stockage lisible par ordinateur selon la revendication 12, dans lequel le mappage entre les sous-canaux et les versions du protocole de communication indique quels sous-canaux de la pluralité de STA doivent être décodés pour déterminer une allocation de ressources, RA, avec les deuxièmes PPDU.

14. Procédé exécuté par un appareil d'un point d'accès, AP, le procédé comprenant les étapes suivantes :
coder (2002) une première unité de données de protocole, PPDU, de la couche physique, PHY, la première PPDU comprenant une trame de déclenchement de liaison descendante, DL, pour une transmission DL à protocole de communication multiple, la trame de déclenchement DL comprenant un mappage de ressources indiquant un mappage entre les sous-canaux et les versions d'un protocole de communication ;
configurer (2004) l'AP pour qu'il transmette la première PPDU, y compris la trame de déclenchement DL, à une pluralité de stations, STA ;
coder (2006) les deuxièmes PPDU conformément aux versions des protocoles de communication indiquées par le mappage des ressources ; et
configurer (2008) l'AP pour qu'il transmette les deuxièmes PPDU sur les sous-canaux indiqués dans le mappage des ressources, conformément aux versions du protocole de communication indiquées dans le mappage des ressources.

15. Procédé selon la revendication 14, dans lequel le mappage entre les sous-canaux et les versions du protocole de communication indique quels sous-canaux de la pluralité de STA doivent être décodés pour déterminer une allocation de ressources, RA, avec les deuxièmes PPDU.
